# EUROPEAN PATENT APPLICATION

(11) **EP 4 590 017 A1**
(43) Date of publication of application: **23.07.2025**
(21) Application number: 23874280.3
(22) Date of filing: 01.09.2023
(51) Int. Cl.: H04W 24/10

(54) **COMMUNICATION METHOD AND APPARATUS**

(30) Priority: 08.10.2022 CN 202211238530; 25.11.2022 CN 202211490569
(71) Applicant: Huawei Technologies Co., Ltd., Shenzhen, Guangdong 518129 (CN)
(72) Inventor: QIN, Cheng, Shenzhen, Guangdong 518129 (CN); WANG, Sihai, Shenzhen, Guangdong 518129 (CN); YANG, Rui, Shenzhen, Guangdong 518129 (CN); LI, Yuan, Shenzhen, Guangdong 518129 (CN); SUN, Yan, Shenzhen, Guangdong 518129 (CN)
(74) Representative: Körber, Martin Hans
(86) International application number: PCT/CN2023/116598
(87) International publication number: WO 2024/074088

(57) **Abstract**

This application relates to the field of wireless communication technologies, and provides a communication method and apparatus. According to this application, a network device considers it a normal phenomenon when failing to receive a first report due to interruption of an artificial intelligence AI function, and does not incorrectly determine that there is a problem in a radio link or the like, to avoid an unnecessary determining error of the network device. The method includes: A terminal device obtains an interruption period of the AI function, where the terminal device supports the artificial intelligence AI function, and the interruption period includes a start time point and interruption duration. The terminal device skips sending the first report to the network device within the interruption period according to a preconfigured rule, or sends a second report to the network device within the interruption period according to a preconfigured rule. The first report is associated with the AI function, and the second report is not associated with the AI function.

## Description

This application claims priorities to Chinese Patent Application No. 202211238530.0, filed with the China National Intellectual Property Administration on October 8, 2022 and entitled "INDICATION METHOD FOR AI MODEL INTERRUPTION, TERMINAL DEVICE, NETWORK DEVICE, AND APPARATUS", and to Chinese Patent Application No. 202211490569.1, filed with the China National Intellectual Property Administration on November 25, 2022 and entitled "COMMUNICATION METHOD AND APPARATUS", both of which are incorporated herein by reference in their entireties.

### TECHNICAL FIELD

This application relates to the field of wireless communication, and in particular, to a communication method and apparatus.

### BACKGROUND

In an air interface artificial intelligence (artificial intelligence, AI) technology used in a wireless communication system, a terminal device loads an AI model corresponding to an AI function, and the AI model is for determining a report that needs to be transmitted through an air interface and that corresponds to the AI function, for example, a channel state indicator (channel state indicator, CSI) report, a beam report (beam report) or a positioning result-related report. Then, the terminal device sends the report determined by the AI model to a network device, to implement better communication performance.

However, a component level of the terminal device is limited. As a result, the AI model corresponding to the AI function may not be immediately used, and correspondingly, the AI function is interrupted. During interruption of the AI function, the terminal device cannot provide, to the network device, the report determined by the AI model, and the network device cannot receive the report determined by the AI model. For the network device, a reason why the corresponding report cannot be received cannot be identified. For example, the network device may consider that there is a problem in radio link quality, causing a determining error of the network device, and affecting performance of the communication system.

### SUMMARY

This application provides a communication method and apparatus, so that a network device considers it a normal phenomenon when failing to receive a first report due to interruption of an AI function, and does not incorrectly determine that there is a problem in a radio link or the like, to avoid an unnecessary determining error of the network device. To achieve the foregoing objective, this application uses the following technical solutions.

According to a first aspect, a communication method is provided. The method may be performed by a terminal device, or may be applied to a chip used in the terminal device. An example in which the method is performed by the terminal device is used below for description. The method includes:
The terminal device obtains an interruption period of an AI function, where the terminal device supports the AI function, and the interruption period includes a start time point and interruption duration.

The terminal device skips sending a first report to a network device within the interruption period according to a preconfigured rule, or sends a second report to the network device within the interruption period according to a preconfigured rule. The first report is associated with the AI function, and the second report is not associated with the AI function.

In other words, within the interruption period of the AI function, the terminal device performs corresponding processing according to the preconfigured rule, for example, skips sending the first report associated with the AI function to the network device. Correspondingly, the network device does not expect to receive the first report from the terminal device within the interruption period of the AI function according to the preconfigured rule. Alternatively, within the interruption period of the AI function, the terminal device sends the second report to the network device according to the preconfigured rule, and the second report is not associated with the AI function. Correspondingly, according to the preconfigured rule, the network device still does not expect to receive the first report within the interruption period of the AI function, but expects to receive the second report from the terminal device. In this way, because the network device does not expect to receive the first report within the interruption period of the AI function according to the preconfigured rule, even if the network device actually does not receive the first report, the network device considers that this is a normal phenomenon, and does not incorrectly determine that there is a problem in a radio link or the like.

In a possible design, the method further includes: The terminal device sends the first report to the network device after the interruption period, so that the network device obtains a report determined based on the AI function, to improve communication performance based on the AI function.

In a possible design, before the terminal device obtains the interruption period of the AI function, the method further includes: The terminal device receives first information from the network device, where the first information indicates the interruption duration.

In other words, the network device indicates the interruption duration for the terminal device, so that the network device flexibly manages the terminal device.

In a possible design, before the terminal device receives the first information from the network device, the method further includes: The terminal device sends capability information to the network device, where the capability information indicates an AI capability level of the terminal device, the AI capability level corresponds to duration, and the duration corresponding to the AI capability level is for determining the interruption duration. For example, the duration corresponding to the AI capability level is less than the interruption duration. Alternatively, the duration corresponding to the AI capability level is equal to the interruption duration.

For example, when the network device configures the interruption duration for the terminal device, the network device determines the interruption duration based on the AI capability level indicated by the capability information.

For another example, when the terminal determines the interruption duration, the terminal device determines the interruption duration based on the AI capability level.

In this way, because the interruption duration is associated with the AI capability level of the terminal device, the interruption duration determined based on the AI capability level can better fit an actual processing capability of the terminal device, thereby helping improve accuracy of the interruption duration.

In a possible design, after the terminal device obtains the interruption period of the AI function, and before the terminal device skips sending the first report to the network device within the interruption period according to the preconfigured rule, or sends the second report to the network device within the interruption period according to the preconfigured rule, the method further includes: The terminal device sends first information to the network device, where the first information indicates the interruption duration.

Because the interruption duration is associated with the terminal device, that the terminal device determines the interruption duration helps improve the accuracy of the interruption duration.

In a possible design, in a scenario in which the terminal device deploys a first AI model, the first information includes the interruption duration. The interruption duration indicates duration between a start moment and an end moment between which the terminal device deploys the first AI model, and the AI function corresponds to the first AI model.

In a possible design, in a model switching scenario of the terminal device, the first information includes first duration T and an interrupt offset ΔT. The AI function interruption duration T' is equal to T-ΔT. T indicates duration between a start moment and an end moment of model switching. The model switching indicates that the terminal device switches from a second AI model of the AI function to the first AI model of the AI function. ΔT indicates an offset of the start time point of the interruption period relative to the start moment of the model switching. The AI function corresponds to the first AI model and the second AI model.

In a possible design, after the terminal device obtains the interruption period of the AI function, and before the terminal device skips sending the first report to the network device within the interruption period according to the preconfigured rule, or sends the second report to the network device within the interruption period according to the preconfigured rule, the method further includes: The terminal device sends the first report to the network device within a time period of the interrupt offset ΔT. The first report transmitted within the time period of the interrupt offset ΔT is determined using the second AI model.

In other words, within the time period of the interrupt offset ΔT, the second AI model can still be normally used, and the terminal device can still provide, to the network device, a report determined using the second AI model, to improve communication performance based on the AI function.

In a possible design, after the terminal device obtains the interruption period of the AI function, and before the terminal device skips sending the first report to the network device within the interruption period according to the preconfigured rule, or sends the second report to the network device within the interruption period according to the preconfigured rule, the method further includes: The terminal device sends first information to the network device. The first information indicates storage space occupied by a first AI model, and the storage space occupied by the first AI model is for determining the interruption duration.

In other words, when there is a specific linear relationship between a size of the storage space occupied by the AI model and the interruption duration, the terminal device reports, to the network device, the size of the storage space occupied by the first AI model, so that the network device determines the interruption duration based on the size of the storage space occupied by the first AI model and the known linear relationship.

In a possible design, before the terminal device obtains the interruption period of the AI function, the method further includes: The terminal device receives first indication information from the network device. The first indication information indicates a first offset value, and the first offset value indicates an offset of the start time point of the interruption period relative to a reference time unit. The reference time unit includes a time unit in which the first indication information is located, or the reference time unit includes a time unit in which a predefined message is located.

In other words, the network device indicates the first offset value of the interruption period for the terminal device, so that the network device flexibly manages the terminal device.

In a possible design, the start time point of the interruption period is a time unit in which a predefined message is located.

In a possible design, before the terminal device obtains the interruption period of the AI function, the method further includes: The terminal device receives second indication information from the network device. The second indication information indicates a second offset value, and the second offset value indicates an offset of a start time point of the first duration T relative to a reference time unit. The reference time unit includes a time unit in which the second indication information is located, or the reference time unit includes a time unit in which a predefined message is located.

In other words, the network device indicates the second offset value of the first duration T for the terminal device, so that the network device flexibly manages the terminal device.

In a possible design, a start time point of the first duration T is a time unit in which a predefined message is located.

In a possible design, the predefined message includes one of the following:
a first predefined message, that is, a first message, where the first message is a message received by the terminal device from the network device, the first message is for determining whether the first AI model is stored by the terminal device, and the AI function corresponds to the first AI model;
a second predefined message, that is, a reply message, where the reply message is a message sent by the terminal device to the network device, the reply message indicates that the first AI model is stored by the terminal device, and the AI function corresponds to the first AI model;
a third predefined message, that is, an activation message, where the activation message is a message received by the terminal device from the network device, the activation message indicates to activate the AI function and/or the first AI model, and the AI function corresponds to the first AI model;
a fourth predefined message, that is, a switching request, where the switching request is a message sent by the terminal device to the network device, and the switching request is for requesting to switch from the second AI model of the AI function to the first AI model of the AI function;
a fifth predefined message, that is, a switching acknowledgment, where the switching acknowledgment is a message received by the terminal device from the network device, and the switching acknowledgment indicates to switch from the second AI model of the AI function to the first AI model of the AI function; and
a sixth predefined message, that is, the first information, where when the first information is information received by the terminal device from the network device, the first information indicates the interruption duration; or when the first information is information sent by the terminal device to the network device, the first information indicates the interruption duration or the storage space occupied by the first AI model, and the storage space occupied by the first AI model is for determining the interruption duration.

In a possible design, the start time point of the interruption period is a time unit agreed on by the terminal device and the network device. For example, the start time point of the interruption period indicates a time unit (or a time point) on which the terminal device and the network device reach a common understanding.

In a possible design, the start time point of the first duration T is a time unit agreed on by the terminal device and the network device. For example, the start time point of the first duration T indicates a time unit (or a time point) on which the terminal device and the network device reach a common understanding.

In a possible design, the first information further indicates the start time point of the interruption period.

For example, when the terminal device sends the first information to the network device, the terminal device determines the start time point of the interruption period. Because the interruption period of the AI function is associated with the terminal device, that the terminal device determines the start time point of the interruption period helps improve the accuracy of the interruption period.

For another example, when the network device sends the first information to the terminal device, the network device determines the start time point of the interruption period, so that the network device flexibly manages the terminal device.

According to a second aspect, a communication method is provided. The method may be performed by a network device, or may be performed by a chip used in the network device. An example in which the method is performed by the network device is used below for description. The method includes:
The network device obtains an interruption period of an artificial intelligence AI function, where the AI function is a function supported by a terminal device, and the interruption period includes a start time point and interruption duration.

The network device skips receiving a first report from the terminal device within the interruption period according to a preconfigured rule, or receives a second report from the terminal device within the interruption period according to a preconfigured rule. The first report is associated with the AI function, and the second report is not associated with the AI function.

In a possible design, the method further includes: The network device receives the first report from the terminal device after the interruption period.

In a possible design, before the network device obtains the interruption period of the AI function, the method further includes: The network device sends first information to the terminal device, where the first information indicates the interruption duration.

In a possible design, before the network device sends the first information to the terminal device, the method further includes: The network device receives capability information from the terminal device, where the capability information indicates an AI capability level of the terminal device, the AI capability level corresponds to duration, and the duration corresponding to the AI capability level is for determining the interruption duration.

In a possible design, before the network device obtains the interruption period of the AI function, the method further includes: The network device receives first information from the terminal device, where the first information indicates the interruption duration.

In a possible design, in a scenario in which the terminal device deploys a first AI model, the first information includes the interruption duration. The interruption duration indicates duration between a start moment and an end moment between which the terminal device deploys the first AI model, and the AI function corresponds to the first AI model.

In a possible design, in a model switching scenario of the terminal device, the first information includes first duration T and an interrupt offset ΔT. The AI function interruption duration T' is equal to T-ΔT. T indicates duration between a start moment and an end moment of model switching. The model switching indicates that the terminal device switches from a second AI model of the AI function to the first AI model of the AI function. ΔT indicates an offset of the start time point of the interruption period relative to the start moment of the model switching. The AI function corresponds to the first AI model and the second AI model.

In a possible design, the method further includes: The network device receives the first report from the terminal device within a time period of the interrupt offset ΔT.

In a possible design, before the network device obtains the interruption period of the AI function, the method further includes: The network device receives first information from the terminal device, where the first information indicates storage space occupied by a first AI model, and the storage space occupied by the first AI model is for determining the interruption duration.

In a possible design, before the network device obtains the interruption period of the AI function, the method further includes: The network device sends first indication information to the terminal device. The first indication information indicates a first offset value, and the first offset value indicates an offset of the start time point of the interruption period relative to a reference time unit. The reference time unit includes a time unit in which the first indication information is located, or the reference time unit includes a time unit in which a predefined message is located.

In a possible design, the start time point of the interruption period is a time unit in which a predefined message is located.

In a possible design, before the network device obtains the interruption period of the AI function, the method further includes: The network device sends second indication information to the terminal device. The second indication information indicates a second offset value, and the second offset value indicates an offset of a start time point of the first duration T relative to a reference time unit. The reference time unit includes a time unit in which the second indication information is located, or the reference time unit includes a time unit in which a predefined message is located.

In a possible design, a start time point of the first duration T is a time unit in which a predefined message is located.

In a possible design, the predefined message includes one of the following:
a first predefined message, that is, a first message, where the first message is a message received by the terminal device from the network device, the first message is for determining whether the first AI model is stored by the terminal device, and the AI function corresponds to the first AI model;
a second predefined message, that is, a reply message, where the reply message is a message sent by the terminal device to the network device, the reply message indicates that the first AI model is stored by the terminal device, and the AI function corresponds to the first AI model;
a third predefined message, that is, an activation message, where the activation message is a message received by the terminal device from the network device, the activation message indicates to activate the AI function and/or the first AI model, and the AI function corresponds to the first AI model;
a fourth predefined message, that is, a switching request, where the switching request is a message sent by the terminal device to the network device, and the switching request is for requesting to switch from the second AI model of the AI function to the first AI model of the AI function;
a fifth predefined message, that is, a switching acknowledgment, where the switching acknowledgment is a message received by the terminal device from the network device, and the switching acknowledgment indicates to switch from the second AI model of the AI function to the first AI model of the AI function; and
a sixth predefined message, that is, the first information, where when the first information is information received by the terminal device from the network device, the first information indicates the interruption duration; or when the first information is information sent by the terminal device to the network device, the first information indicates the interruption duration or the storage space occupied by the first AI model, and the storage space occupied by the first AI model is for determining the interruption duration.

In a possible design, the start time point of the interruption period is a time unit agreed on by the terminal device and the network device. For example, the start time point of the interruption period indicates a time unit (or a time point) on which the terminal device and the network device reach a common understanding.

In a possible design, the start time point of the first duration T is a time unit agreed on by the terminal device and the network device.

In a possible design, the first information further indicates the start time point of the interruption period.

According to a third aspect, a communication apparatus is provided. The communication apparatus includes a processor. The processor is coupled to a memory, and is configured to read and execute instructions in the memory, so that the communication apparatus performs the method performed by the terminal device according to any one of the foregoing aspects or the possible designs of the foregoing aspects. The communication apparatus may be the terminal device according to the first aspect or any possible design of the first aspect, or a chip implementing functions of the terminal device.

According to a fourth aspect, a chip is provided. The chip includes a processing circuit and an input/output interface. The input/output interface is configured to communicate with a module outside the chip. For example, the chip may be a chip that implements a function of the terminal device according to the first aspect or any possible design of the first aspect. The processing circuit is configured to run a computer program or instructions, to implement the method according to the first aspect or any possible design of the first aspect.

According to a fifth aspect, a communication apparatus is provided. The communication apparatus includes a processor. The processor is coupled to a memory, and is configured to read and execute instructions in the memory, so that the communication apparatus performs the method performed by the network device according to any one of the foregoing aspects or the possible designs of the foregoing aspects. The communication apparatus may be the network device according to the second aspect or any possible design of the second aspect, or a chip implementing functions of the network device.

According to a sixth aspect, a chip is provided. The chip includes a processing circuit and an input/output interface. The input/output interface is configured to communicate with a module outside the chip. For example, the chip may be a chip that implements a function of the network device according to the second aspect or any possible design of the second aspect. The processing circuit is configured to run a computer program or instructions, to implement the method according to the second aspect or any possible design of the second aspect.

According to a seventh aspect, a computer-readable storage medium is provided. The computer-readable storage medium stores instructions. When the instructions are run on a computer, the computer may perform the method according to any one of the foregoing aspects.

According to an eighth aspect, a computer program product including instructions is provided. When the computer program product runs on a computer, the computer may perform the method according to any one of the foregoing aspects.

According to a ninth aspect, a circuit system is provided. The circuit system includes a processing circuit, and the processing circuit is configured to perform the method according to any one of the foregoing aspects.

According to a tenth aspect, a communication system is provided, including a terminal device and a network device. The terminal device is configured to perform the method according to the first aspect or any possible design of the first aspect, and the network device is configured to perform the method according to the second aspect or any possible design of the second aspect.

For technical effect of any one of the designs of the second aspect to the tenth aspect, refer to the beneficial effect in the corresponding methods provided above. Details are not described herein again.

### BRIEF DESCRIPTION OF DRAWINGS

FIG. 1 is a diagram of an architecture of a communication system according to an embodiment of this application;
FIG. 2 is a diagram of a structure of an AI model according to an embodiment of this application;
FIG. 3 is a diagram of a position of an interruption period according to an embodiment of this application;
FIG. 4 is a diagram of a position of another interruption period according to an embodiment of this application;
FIG. 5 is a schematic flowchart of a communication method according to an embodiment of this application;
FIG. 6 is a diagram of a position of another interruption period according to an embodiment of this application;
FIG. 7 is a diagram of a position of a start time point according to an embodiment of this application;
FIG. 8 is a diagram of a position of another start time point according to an embodiment of this application;
FIG. 9 is a diagram of a position of another start time point according to an embodiment of this application;
FIG. 10 is a diagram of a position of another start time point according to an embodiment of this application;
FIG. 11 is a diagram of a position of another start time point according to an embodiment of this application;
FIG. 12 is a schematic flowchart of another communication method according to an embodiment of this application;
FIG. 13 is a diagram of a position of another interruption period according to an embodiment of this application;
FIG. 14 is a diagram of a position of another interruption period according to an embodiment of this application;
FIG. 15 is a diagram of a position of another interruption period according to an embodiment of this application;
FIG. 16 is a schematic flowchart of another communication method according to an embodiment of this application;
FIG. 17 is a schematic flowchart of another communication method according to an embodiment of this application;
FIG. 18 is a diagram of a correspondence between storage space and duration according to an embodiment of this application;
FIG. 19 is a schematic flowchart of another communication method according to an embodiment of this application;
FIG. 20 is a schematic flowchart of another communication method according to an embodiment of this application;
FIG. 21 is a diagram of a position of another interruption period according to an embodiment of this application;
FIG. 22 is a diagram of a position of another interruption period according to an embodiment of this application;
FIG. 23 is a schematic flowchart of another communication method according to an embodiment of this application;
FIG. 24 is a schematic flowchart of another communication method according to an embodiment of this application;
FIG. 25 is a schematic flowchart of another communication method according to an embodiment of this application;
FIG. 26 is a schematic flowchart of another communication method according to an embodiment of this application;
FIG. 27 is a schematic flowchart of another communication method according to an embodiment of this application; and
FIG. 28 is a diagram of a structure of a communication apparatus according to an embodiment of this application.

### DESCRIPTION OF EMBODIMENTS

The following describes technical solutions of this application with reference to accompanying drawings.

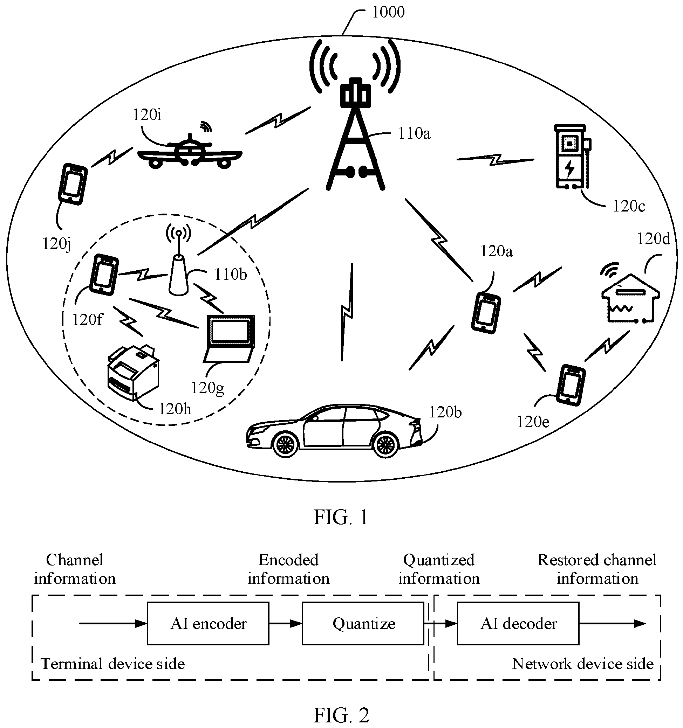

FIG. 1 is a diagram of an architecture of a communication system 1000 to which an embodiment of this application is applicable. As shown in FIG. 1, the communication system 1000 includes at least one network device (for example, 110a and 110b in FIG. 1) and at least one terminal device (for example, 120a to 120j in FIG. 1). The terminal device is connected to the network device in a wireless manner. FIG. 1 is merely a diagram. The communication system may further include other network devices, for example, a wireless relay device and a wireless backhaul device (not shown in FIG. 1).

The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a wireless fidelity (wireless fidelity, Wi-Fi) system, or the like. The network device may alternatively be a module or unit that completes some functions of a base station, for example, may be a central unit (central unit, CU), or may be a distributed unit (distributed unit, DU). The CU completes functions of a radio resource control (radio resource control, RRC) protocol and a packet data convergence protocol (packet data convergence protocol, PDCP) of a base station, and may further complete functions of a service data adaptation protocol (service data adaptation protocol, SDAP). The DU completes functions of a radio link control (radio link control, RLC) layer and a medium access control (medium access control, MAC) layer of a base station, and may further complete functions of some physical (physical, PHY) layers or all physical layers. For specific descriptions of the foregoing protocol layers, refer to related technical specifications of the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application. For ease of description, the following uses the network device as an example for description.

The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and an artificial satellite in the air. Application scenarios of the network device and the terminal device are not limited in embodiments of this application.

Roles of the network device and the terminal device may be relative. For example, the helicopter or the uncrewed aerial vehicle 120i in FIG. 1 may be configured as a mobile base station. For the terminal device 120j that accesses the radio access network via 120i, the terminal device 120i is a network device. However, for the network device 110a, 120i is a terminal device. In other words, 110a communicates with 120i by using a wireless air interface protocol. Certainly, communication between 110a and 120i may alternatively be performed according to an interface protocol between base stations. In this case, relative to 110a, 120i is also a network device. Therefore, both the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

Communication may be performed between the network device and the terminal device, between the network devices, and between the terminal devices by using a licensed spectrum, an unlicensed spectrum, or both a licensed spectrum and an unlicensed spectrum. Communication may be performed by using a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device herein may be a control center in the foregoing application scenarios such as a smart grid, industrial control, intelligent transportation, and a smart city. A function of the terminal device may alternatively be performed by a module (for example, a chip or a modem) in the terminal device, or may be performed by an apparatus including the function of the terminal device.

In this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device. When communicating with the serving cell, the terminal device is further interfered with by a signal from a neighboring cell.

It should be noted that the solutions in embodiments of this application may also be used in another communication system, and a corresponding name may also be replaced with a name of a corresponding function in the another communication system.

For ease of understanding embodiments of this application, the following first briefly describes terms in embodiments of this application. It should be understood that these descriptions are merely intended to facilitate understanding of embodiments of this application, and shall not constitute any limitation on this application.

### 1. AI function and AI model

In the new radio (new radio, NR) protocol Release 18 (Release-18), discussions related to air interface AI are introduced. For example, the AI is used to resolve problems such as channel state indicator (channel state indicator, CSI) feedback, beam management, and positioning, to implement better communication performance.

The AI function indicates a function implemented by using AI. For example, the AI is used to resolve a CSI feedback problem, to implement an AI CSI feedback function. In this case, AI CSI feedback (AI CSI feedback) may be considered as an AI function. For another example, the AI is used to resolve a beam management problem. In this case, AI beam management (AI beam management) may be considered as an AI function. For still another example, the AI is used to resolve a positioning problem. In this case, AI positioning (AI positioning) may be considered as an AI function.

The AI model indicates a model constructed to implement an AI function. One AI function corresponds to one or more AI models. The AI CSI feedback function is used as an example. The AI function corresponds to two AI models: an AI model 1 and an AI model 2. The AI model 1 corresponds to one scenario, for example, a scenario in which the terminal device is located indoors. The AI model 2 corresponds to another scenario, for example, a scenario in which the terminal device is located outdoors. Model switching (model switching) can be performed on different AI models of a same AI function.

It is easy to understand that, during implementation of a conventional communication algorithm, an algorithm on a terminal device side is usually executed on a general-purpose processor, for example, a central processing unit (central processing unit, CPU) or a digital signal processor (digital signal processor, DSP). Training or inference of the AI model is a computing-intensive task, and is usually implemented by using a device with more dense computing units, for example, a graphic processing unit (graphic processing unit, GPU)/neural processing unit (neural processing unit, NPU), to achieve higher computing efficiency. Therefore, an AI algorithm applied to communication on the terminal device side may also continue to use this mode and be executed on AI-dedicated hardware.

For example, a related processing process of the AI model is as follows.

Model delivery (model delivery) indicates delivery of an AI model from a network device side to the terminal device side, or from the terminal device side to the network device side. In embodiments of this application, model transmission may be implemented through air interface transmission, or may be implemented through non-air interface transmission.

Model deployment (model deployment) indicates converting an AI model into an executable format (for example, an executable file or an image file), and delivering the executable format to a target device (for example, a network device or a terminal device) in which inference is performed. In embodiments of this application, model deployment in the target device may be understood as that the terminal device (or the network device) changes, in a manner like conversion or image loading, an AI model corresponding to an AI function into a format readily executable in a hardware device.

For example, for an AI model described in a model description format, a deployment process includes a process of compiling the model description format into an executable file and loading the executable file to hardware of the target device.

For another example, for an AI model that has become an executable file or an image file, a deployment process includes a process of loading a parameter and the like in the executable file or the image file to hardware of the target device.

Model activation (model activation) indicates that a terminal device (or a network device) prepares to enable an AI model of an AI function.

Model deactivation (model deactivation) indicates that a terminal device (or a network device) prepares to disable an AI model of an AI function.

Model switching indicates that a terminal device (or a network device) prepares to deactivate an AI model of an AI function and activate another AI model of the AI function.

### 2. One-sided model and two-sided model

There are two types of AI models: a one-sided model and a two-sided model.

The one-sided model indicates that an AI model is deployed on a network device side or a terminal device side, and either side can separately complete an inference process of the model. A model inference result can be exchanged between a network device and a terminal device.

For the one-sided model, training of the AI model may be completed by the side on which the AI model is deployed, that is, by either the network device side or the terminal device side on which the AI model is deployed, without participation of a peer side.

It is easy to understand that, in the one-sided model, a training position of the AI model may be the same as or different from a deployment position of the AI model. For example, model training of an AI model deployed on the terminal device side may be completed by the terminal device. Alternatively, a cloud server (for example, an over the top (over the top, OTT) server) of a terminal device vendor may obtain training data of a terminal device of the vendor, then perform model training based on the training data, to obtain an AI model, and further push the AI model to the terminal device of the vendor.

The two-sided model indicates that an entire AI model is deployed on the network device side and the terminal device side, that is, a function of the entire AI model needs to be jointly completed by models of the network device and the terminal device. Refer to FIG. 2. In an AI function of AI CSI feedback, an AI encoder and a quantizer in an AI model are on the terminal device side, and an AI decoder in the AI model is on the network device side.

FIG. 2 shows a typical two-sided AI model, namely, a CSI feedback manner based on a structure of an AI autoencoder. The AI autoencoder is a general term for a type of AI network structure, and generally includes two parts: an AI encoder and an AI decoder. When the two-sided AI model is trained, an optimization objective is to ensure that an input of the AI encoder is the same as a target output of the AI decoder as much as possible. After training of the two-sided AI model is completed, the AI encoder may be used to compress and encode input information into a vector or a matrix, and continue to input such an encoded output into the AI decoder, to restore an original input. In this embodiment of this application, there is no limitation on a network structure of the AI encoder or the AI decoder, and a common model structure like a convolutional neural network or a fully connected network may be used.

In an actual application process, as shown in FIG. 2, a terminal device first obtains an eigenvector of a channel by measuring a downlink reference signal, then encodes the eigenvector via the AI encoder to obtain encoded information, further quantizes the encoded information to obtain quantized information, and finally feed back the quantized information to a network device. On the network device side, after receiving the quantized information, the network device inputs the quantized information into the AI decoder, to obtain restored channel information as a subsequent precoding matrix.

The following describes three generation manners of the two-sided model:
Type1 one-sided centralized training in which a two-sided model is trained on the network device side or the terminal device side, and a part that is of the trained model and that is for the peer side is delivered to the peer side, where the two-sided model shown in FIG. 2 is used as an example, and the network device trains the entire model, and delivers an encoder part (for example, the AI encoder in FIG. 2) of the model to the terminal device side, where a delivery manner may be air interface delivery or offline delivery;
Type2 two-sided joint training in which the network device and the terminal device jointly train a same model, where the two-sided model shown in FIG. 2 is used as an example, the terminal device trains an encoder part (for example, the AI encoder in FIG. 2) of the model, the network device trains a decoder part (for example, the AI decoder in FIG. 2), and the network device and the terminal device exchange training data, gradient information of backward propagation required in a training process, and inference information of forward propagation, where in this manner, model training on the two sides (namely, the network device side and the terminal device side) is synchronous, that is, each iteration process on the terminal device side is bound to one iteration process on the network device side; and
Type3 two-sided separate training in which the network device and the terminal device aim to train two parts of a same model, but the network device and the terminal device do not need to deliver gradient information when training the model, where for example, the network device may first train a complete model, namely, a model including an AI encoder and an AI decoder, and then send an input and an output of the AI encoder as an input and a label of training data to the terminal device side, so that the terminal device side can also train a model similar to the AI encoder on the network device side, where in this manner, only the input and output of the AI encoder need to be delivered between the network device side and the terminal device side, and model training on the two sides does not need to be performed synchronously.

### 3. Interruption of an AI function

Because a quantity of parameters of an AI model may be large, and quantities of parameters and structures of different AI models may also vary greatly, execution efficiency of different AI models on same AI hardware is also different. The execution efficiency includes hardware resource utilization during computing, and also preparation before running the AI model, for example, loading of a model parameter and a model structure. Compared with the network device side, the terminal device side has a limited hardware level, for example, a component capability and a storage capability are limited. Therefore, in some cases, a period of time is required before the terminal device runs an AI model, so that the terminal device prepares the hardware for using the AI model (for example, parameter loading, model structure loading, storage read/write, firmware refreshing, and hardware shutdown). As a result, the terminal device cannot implement an AI function corresponding to the AI model, that is, the AI function is interrupted. This affects use of the model on both the terminal device side and the network device side. For example, when the network device side needs to use an AI model together with the terminal device side, because the model on the terminal device side cannot be used, an AI function on the network device side is interrupted. In addition, if the AI function is interrupted, some air interface exchange related to the AI function, for example, functions such as terminal device reporting, cannot be normally performed.

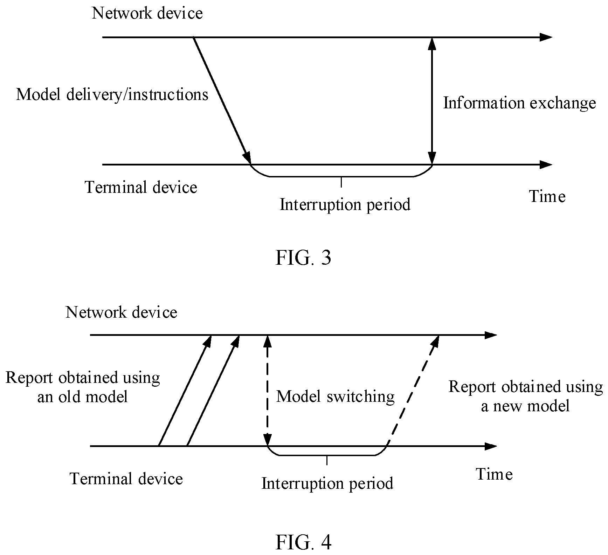

FIG. 3 is used as an example. For an AI function 1, in an AI model deployment scenario, a network device sends model information to a terminal device at a moment. Correspondingly, the terminal device receives the model information from the network device. The model information includes information about the AI model 1. For example, the model information includes a structure of the AI model 1 and a parameter of the AI model 1. For another example, the model information includes a compiled AI model 1. For still another example, the model information includes an image of the AI model 1. Then, the terminal device starts to deploy the AI model 1 in the device. After a period of time, for example, an interruption period in FIG. 3, the terminal device starts to use the AI model 1, for example, the terminal device and the network device perform information exchange. The exchanged information may include a report generated by the AI model 1.

As shown in FIG. 3, the interruption period indicates a time period from a time point at which the terminal device starts to deploy the AI model 1 in the device to a time point at which the terminal device completes deployment of the AI model 1. During this period, although the network device expects to receive the report determined by the AI model 1, the network device fails to receive the report determined by the AI model 1, that is, the AI function 1 is interrupted. The interruption period shown in FIG. 3 may be described as an interruption period of the AI function 1.

It is easy to understand that the model information may be replaced with an instruction 1. The instruction 1 indicates the terminal device to deploy the AI model 1, or the instruction 1 indicates the terminal device to activate the AI model 1, and the terminal device deploys the AI model 1 in response to the instruction 1. It should be noted that the AI model 1 may be pre-stored in the terminal device, or may be delivered by an OTT server to the terminal device in through application layer data transmission. In other words, the network device does not need to perform model transmission by sending the model information using air interface signaling.

FIG. 4 is used as an example. For an AI function 1, in an AI model switching scenario, a terminal device switches from an AI model 2 (an old model) of the AI function 1 to an AI model 1 (a new model) of the AI function 1. As shown in FIG. 4, the terminal device determines, using the AI model 2, a report to be reported to a network device, and then sends the report obtained using the AI model 2 to the network device. At a moment, the terminal device performs model switching (for example, the network device indicates the terminal device to perform model switching, or the terminal device requests model switching from the network device and the network device agrees on model switching), that is, switches from the AI model 2 to the AI model 1.

Specifically, in a possible implementation, when the terminal device deletes the AI model 2 from AI acceleration hardware such as an NPU, and deployment of the AI model 1 is not completed, the AI function 1 starts to be interrupted. Until the deployment of the AI model 1 is completed, the terminal device starts to use the AI model 1, and an interruption period of the AI function 1 ends. Then, the terminal device determines, using the AI model 1, a report to be reported to the network device, and then sends the report obtained using the AI model 1 to the network device.

As shown in FIG. 4, the interruption period indicates a time period starting from a time point known by both the terminal device and the network device (which may also be described as a start moment of model switching), during which the terminal device starts deleting the AI model 2 from the AI acceleration hardware such as an NPU, and until the terminal device completes the deployment of the AI model 1. During this period, although the network device expects to receive the report determined by the AI model 1, the network device fails to receive the report determined by the AI model 1, that is, the AI function 1 is interrupted. The interruption period shown in FIG. 4 may be described as an interruption period of the AI function 1.

In addition, a trigger factor of model switching is described as follows: Because AI models applicable to different channel environments or scenarios may be different, an AI model that needs to be used on a terminal device side keeps changing. For example, the terminal device switches between different AI models of a same AI function.

For example, the AI function is an AI CSI feedback function, and the AI function corresponds to two AI models. One AI model is a model constructed for an indoor environment, and the other AI model is a model constructed for an outdoor environment. In the AI CSI feedback function, when the terminal device moves from indoor to outdoor, model switching occurs. The AI model before switching is a model constructed for the indoor environment, and the AI model after the switching is a model constructed for the outdoor environment.

For another example, the AI function is an AI CSI feedback function, and the AI function corresponds to two AI models. One AI model is a model constructed for an outdoor environment at a moment 1, and the other AI model is a model constructed for the outdoor environment at a moment 2. The moment 1 is different from the moment 2. In other words, when related data (for example, a building or an obstruction) in this scenario changes at different moments, a channel feature also changes accordingly, and an AI model corresponding to the scenario needs to be updated. For example, the network device performs updating. The network device performs retraining based on newly collected data, to obtain an updated model. For example, the network device may not change a model structure of an original model, and only retrain a model parameter, to obtain a new model. Alternatively, the network device may redesign a network structure, and train a corresponding parameter, to obtain a new model.

It can be seen from FIG. 3 and FIG. 4 that, because interruption duration is associated with the terminal device, the terminal device side can learn of the interruption period of the AI function, but a network device side cannot perceive the interruption period of the AI function. In other words, during the interruption period of the AI function, the network device still expects to receive a report determined using a model of the AI function, but the network device does not receive the corresponding report. In this case, the network device cannot identify a reason why the corresponding report cannot be received. For example, the network device may consider that there is a problem in radio link quality or the like, that is, the network device performs an unnecessary determining error, and performance of a communication system is affected.

In view of this, an embodiment of this application provides a communication method. The method may be applied to the communication system shown in FIG. 1. In this embodiment of this application, an interruption period of an AI function includes a start time point and interruption duration. For brevity of description, an interruption duration in the following descriptions indicates interruption duration of an interruption period. A unit of the interruption duration may be a frame, a subframe, a slot, a symbol, a millisecond, a microsecond, a sampling period Tc or Ts, or the like. In this embodiment of this application, the slot is used as an example to describe the interruption duration. The interruption period may be otherwise described as, for example, an interruption window. In this embodiment of this application, the interruption period is used as an example for description. A unified description is provided herein and details are not described below again.

In the communication method provided in this embodiment of this application, a terminal device obtains an interruption period of an AI function, where the terminal device supports the AI function, and the interruption period includes a start time point and interruption duration. The terminal device skips sending a first report to a network device within the interruption period according to a preconfigured rule, or sends a second report to the network device within the interruption period according to a preconfigured rule. The first report is associated with the AI function, and the second report is not associated with the AI function. In other words, within the interruption period of the AI function, the terminal device performs corresponding processing according to the preconfigured rule, for example, skips sending the first report associated with the AI function to the network device. Correspondingly, the network device does not expect to receive the first report from the terminal device within the interruption period of the AI function according to the preconfigured rule. Alternatively, within the interruption period of the AI function, the terminal device sends the second report to the network device according to the preconfigured rule, and the second report is not associated with the AI function. Correspondingly, according to the preconfigured rule, the network device still does not expect to receive the first report within the interruption period of the AI function, but expects to receive the second report from the terminal device. In this way, because the network device does not expect to receive the first report within the interruption period of the AI function according to the preconfigured rule, even if the network device actually does not receive the first report, the network device considers that this is a normal phenomenon, and does not incorrectly determine that there is a problem in a radio link or the like.

It should be understood that, in the following embodiments of this application, a name of a message between devices, a name of each parameter in the message, or the like is merely an example, and may alternatively be another name in a specific implementation. This is not specifically limited in embodiments of this application.

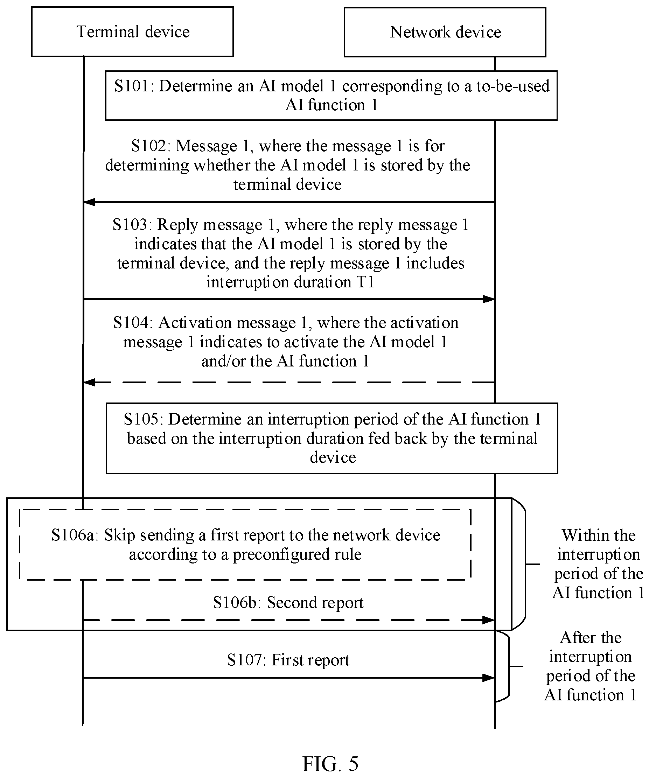

With reference to FIG. 5 to FIG. 27, the following describes in detail the communication method provided in embodiments of this application.

### Embodiment 1

Embodiment 1 aims at a model deployment scenario on a terminal device side, relates to a two-sided model, and corresponds to an AI CSI feedback function. As shown in FIG. 2, the AI model is obtained through separate training by the network device and the terminal device. For details, refer to the description of the Type3 two-sided separate training. In Embodiment 1, the terminal device reports interruption duration to the network device.

For example, as shown in FIG. 5, this embodiment includes the following steps.

S101: The network device determines an AI model 1 corresponding to a to-be-used AI function 1.

For example, the AI function 1 is the AI CSI feedback function. The network device determines that the terminal device needs to use the AI CSI feedback function. The AI function 1 corresponds to one or more AI models. For example, the AI function 1 corresponds to the AI model 1. The network device determines to use the AI model 1 corresponding to the AI function 1. A part of the AI model 1 on the terminal device side may include an AI encoder, and a part of the AI model 1 on a network device side may include an AI decoder, as shown in FIG. 2.

It should be noted that the AI CSI feedback function may correspond to a plurality of configurations, and each configuration includes a configuration of AI CSI feedback measurement or reporting. For example, the AI CSI feedback function has an AI CSI reporting configuration 1 and an AI CSI reporting configuration 2, and different reporting configurations have different measurement or reporting content, different feedback bits, or the like. Different reporting configurations may use a same AI model, or may use different AI models. In this embodiment of this application, an example in which the AI CSI feedback function corresponds to one AI CSI reporting configuration is used for description. Correspondingly, the AI CSI feedback function corresponds to one AI model.

It should be understood that how the network device determines the AI function 1 is implementation behavior of the network device. This is not limited in embodiments of this application. In some embodiments, if the terminal device served by the network device supports the AI function 1 (whether the terminal device supports the AI function 1 may be obtained from capability information reported by the terminal device), when the terminal device enters a cell range to which the network device belongs, the network device may determine to enable the AI function 1 of the terminal device.

It is easy to understand that, because the AI model 1 corresponding to the AI function 1 is a two-sided model, when the network device determines to use the model 1 (specifically, the part of the model 1 on the network device side, namely, the AI decoder), the terminal device also needs to use the corresponding model 1 (specifically, the part of the model 1 on the terminal device side, namely, the AI encoder, where optionally, a quantizer is further included). In this embodiment of this application, that the terminal device side determines the AI model 1 indicates that the part of the AI model 1 on the terminal device side is determined, and the part of the AI model 1 on the network device side does not need to be included. However, in the Type3 model training manner, the network device only knows whether training data is delivered, and whether the terminal device completes model training based on the delivered training data is unknown to the network device. Therefore, when determining that the AI model 1 needs to be used, the network device first needs to query whether the AI model 1 (specifically, the part of the model 1 on the terminal device side) is stored on the terminal device side, that is, the network device performs S102.

S102: The network device sends a message 1 to the terminal device. Correspondingly, the terminal device receives the message 1 from the network device.

The message 1 is for determining whether the AI model 1 is stored by the terminal device. For example, the AI function 1 is the AI CSI feedback function. The message 1 is for determining whether the AI encoder is stored on the terminal device side, and the AI encoder on the terminal device side matches the AI decoder to be used on the network device side.

It is easy to understand that, that the AI model 1 is stored by the terminal device may be understood as that a structure of the AI model 1 and a parameter of the AI model 1 are stored by the terminal device, or an executable file, an image file, or the like of the AI model 1 is stored by the terminal device.

For example, the message 1 includes an identifier of the AI model 1. The identifier of the AI model 1 may include information such as a model number and a model version.

Alternatively, the message 1 includes one index. The index in the message 1 is an index in a preconfigured set, and the preconfigured set is a set including the model identifier and the model version, as shown in Table 1-1.

**Table 1-1**

| Index | Model identifier | Model version |
|---|---|---|
| 1 | A | 1.0 |
| 2 | A | 2.0 |
| 3 | B | 1.0 |
| 4 | B | 2.0 |

Table 1-1 is used as an example. When the model identifier of the AI model 1 is A, and the model version is 1.0, the message 1 includes an index 1. When the model identifier of the AI model 1 is A, and the model version is 2.0, the message 1 includes an index 2. Others may be deduced by analogy, and details are not described again.

It is easy to understand that, in this embodiment of this application, the model identifier is pre-agreed on by the terminal device and the network device. For example, the terminal device pre-registers one or more models on the network device side. Each model registered by the terminal device corresponds to a unique model identifier.

For example, the message 1 may be an RRC message, for example, a configuration message for AI CSI reporting.

Alternatively, the message 1 may be a piece of medium access control-control element (medium access control-control element, MAC-CE) signaling.

Alternatively, the message 1 may be a piece of downlink control information (downlink control information, DCI).

It is easy to understand that the message 1 may alternatively have another name, for example, a query message or a query instruction. In embodiments of this application, the message 1 is used as an example for description, and should not be construed as a limitation on embodiments of this application.

Optionally, for the terminal device, after receiving the message 1, the terminal device sends an acknowledgment (acknowledgment, ACK) corresponding to the message 1 to the network device. Correspondingly, the network device receives the ACK corresponding to the message 1 from the terminal device. The ACK corresponding to the message 1 indicates that the terminal device successfully receives the message 1.

For the terminal device, after receiving the message 1, the terminal device determines whether the AI model 1 indicated by the message 1 is stored by the terminal device. If the AI model 1 is not stored, a negative acknowledgment message is returned. Optionally, the negative acknowledgment message does not indicate interruption duration of an interruption period. Alternatively, the negative acknowledgment message includes information about invalid interruption duration. This is not limited in this embodiment of this application. On the contrary, if the AI model 1 is stored by the terminal device, S103 is performed.

S103: The terminal device sends a reply message 1 to the network device. Correspondingly, the network device receives the reply message 1 from the terminal device.

The reply message 1 indicates that the AI model 1 is stored by the terminal device. For example, the AI function 1 is the AI CSI feedback function. The reply message 1 indicates whether the AI encoder is on the terminal device side, and the AI encoder on the terminal device side matches the AI decoder to be used on the network device side.

For example, the reply message 1 may be an RRC message, MAC-CE signaling, or uplink control information (uplink control information, UCI). This is not limited in this embodiment of this application.

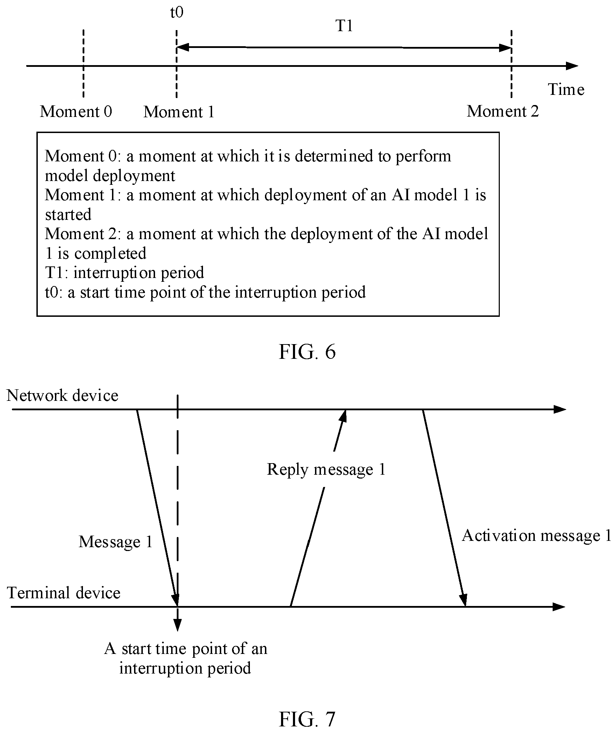

Optionally, the reply message 1 includes interruption duration T1. The interruption duration T1 indicates duration in which the AI function 1 is interrupted because the terminal device deploys the AI model 1 in the device, for example, duration from a time point at which the terminal device starts to deploy the AI model 1 (specifically, the part of the model 1 on the terminal device side) in the device to a time point at which the terminal device completes deployment of the AI model 1, as shown in FIG. 6.

Alternatively, the interruption duration may be considered as duration between a start time point and an end time point. The start time point indicates a time point known by both the terminal device and the network device (for example, a time point at which the terminal device starts to deploy a model in the device, a time point of which the terminal device notifies the network device and at which deployment of the model is nominally started in the terminal device, or another time point of which the terminal device notifies the network device). The end time point indicates an earliest time point at which the terminal device can determine, using the AI model 1, a to-be-reported first report, an earliest time point that is known by the network device and at which the terminal device can report the first report, or a time point of which the terminal device notifies the network device and at which deployment of the model is nominally completed in the terminal device. That the terminal device can determine, using the AI model 1, the to-be-reported first report may be understood as that the terminal device completes the deployment of the AI model 1, and an executable file or an image file corresponding to the AI model 1 is loaded to hardware of the terminal device.

It is easy to understand that a moment 0 in FIG. 6 may be a moment at which the terminal device receives the message 1.

For example, a process of determining the interruption duration T1 is as follows: The terminal device estimates the interruption duration T1 based on one or more of a storage location of the AI model 1, storage space occupied by the AI model 1, and the structure of the AI model 1.

For example, a memory of the terminal device stores 10 AI models, which are respectively denoted as models {1, ..., and 10}. The terminal device further stores brief introduction information of the 10 AI models, for example, parameter quantities, model structures, and interruption duration. Interruption duration of the 10 AI models is denoted as {t_1, ..., and t_10}. The interruption duration t_1 indicates duration required for loading the AI model 1 from the memory of the terminal device to AI hardware and enabling the AI hardware to run the AI model 1. The interruption duration t_2 indicates duration required for loading an AI model 2 from the memory of the terminal device to the AI hardware and enabling the AI hardware to run the AI model 2. Other interruption duration may be deduced by analogy, and details are not described again.

For the terminal device, after receiving the message 1, the terminal device determines, based on the prestored information, that the AI model 1 is stored in the memory, and then the terminal device determines, based on the prestored interruption duration {t_1, ..., and t_10}, that the interruption duration T1 is equal to t_1.

For another example, the memory of the terminal device stores 10 AI models, which are respectively denoted as models {1, ..., and 10}. The terminal device further stores a correspondence between a size of storage space occupied by each AI model, a model structure, and interruption duration, as shown in Table 1-2.

**Table 1-2**

| | Size of the occupied storage space<X Mbyte | Size of the occupied storage space≥X Mbyte |
|---|---|---|
| Model structure 1 | t1 | t3 |
| Model structure 2 | t2 | t4 |

Table 1-2 is used as an example. When storage space occupied by the AI model 1 is less than X Mbytes, and the AI model 1 belongs to the model structure 1, the terminal device determines that the interruption duration T1 is equal to t1. When the storage space occupied by the AI model 1 is greater than or equal to X Mbytes, and the AI model 1 belongs to the model structure 1, the terminal device determines that the interruption duration T1 is equal to t3. Other cases may be deduced by analogy, and details are not described again.

Optionally, for the network device, after receiving the reply message 1, the network device sends an ACK corresponding to the reply message 1 to the terminal device. Correspondingly, the terminal device receives the ACK corresponding to the reply message 1 from the network device. The ACK corresponding to the reply message 1 indicates that the network device successfully receives the reply message 1.

It is easy to understand that, in S102, an example in which the reply message 1 includes the interruption duration T1 is used for description. There is no doubt that the reply message 1 may alternatively not carry the interruption duration T1, and the interruption duration T1 is reported to the network device based on another message. This is not limited in this embodiment of this application.

It is easy to understand that the network device may determine, by performing S102 and S103, that the AI model 1 is stored by the terminal device, but this does not mean that the network device definitely uses the AI model 1. Therefore, after the terminal device performs S103, if the network device determines to implement the AI function 1 using the AI model 1, the network device performs S104.

S104: The network device sends an activation message 1 to the terminal device. Correspondingly, the terminal device receives the activation message 1 from the network device.

The activation message 1 indicates to activate the AI model 1 and/or the AI function 1.

For example, when the activation message 1 indicates to activate the AI model 1, the activation message 1 may include information such as the model identifier and a version number of the AI model 1, to indicate the terminal device to activate the AI model 1.

For another example, when the activation message 1 indicates to activate the AI function 1, because the terminal device has deployed the AI model 1 corresponding to the AI function 1 in the device, the terminal device determines, based on the activation message 1, that a to-be-activated AI model is the AI model 1.

For example, the activation message 1 may be an RRC message, MAC-CE signaling, or DCI. This is not limited in this embodiment of this application.

Optionally, for the terminal device, after receiving the activation message 1, the terminal device sends an ACK corresponding to the activation message 1 to the network device. Correspondingly, the network device receives the ACK from the terminal device. The ACK corresponding to the activation message 1 indicates that the terminal device successfully receives the activation message 1.

It should be understood that, in this embodiment of this application, the AI model 1 is an AI model that the network device indicates the terminal device to run. The network device indicates, based on the RRC message, the MAC-CE signaling, or the DCI, the terminal device to run the AI model 1.

For example, the AI function 1 is the AI CSI feedback function. The network device indicates, based on the RRC message, the terminal device to run the AI model 1. In this case, the RRC message may be an AI CSI reporting configuration message, and the RRC message includes the identifier of the AI model 1. In other words, one AI model, that is, the AI model 1, is configured in an AI CSI reporting configuration.

It is easy to understand that the RRC message indicating the terminal device to run the AI model 1 and the message 1 in S102 may be a same message. Alternatively, the RRC message indicating the terminal device to run the AI model 1 and the activation message 1 in S104 may be a same message.

For another example, the AI function 1 is the AI CSI feedback function. The network device indicates, based on the MAC-CE signaling, the terminal device to run the AI model 1. In this case, a plurality of AI models may be configured in an AI CSI reporting configuration, and the plurality of AI models include the AI model 1. The MAC-CE signaling indicates the AI model 1.

It is easy to understand that the MAC-CE signaling indicating the terminal device to run the AI model 1 and the message 1 in S102 may be a same message. Alternatively, the MAC-CE signaling indicating the terminal device to run the AI model 1 and the activation message 1 in S104 may be a same message.

For still another example, the AI function 1 is the AI CSI feedback function. The network device indicates, based on the DCI, the terminal device to run the AI model 1. In this case, a plurality of AI models may be configured in an AI CSI reporting configuration, and the plurality of AI models include the AI model 1. Then, the network device indicates one or more AI models based on MAC-CE signaling. The AI model indicated by the MAC-CE signaling belongs to the plurality of AI models. The AI model indicated by the MAC-CE signaling is in a one-to-one correspondence with a field in the DCI. For example, an AI model 1 indicated by the MAC-CE signaling corresponds to a field 1 in the DCI, and an AI model 2 indicated by the MAC-CE signaling corresponds to a field 2 in the DCI. In a subsequent process of using the AI model, the network device indicates, based on the DCI, an AI model to be run by the terminal device. For example, that the field 1 in the DCI indicates a first value may be understood as that the network device indicates the terminal device to run the AI model 1.

It is easy to understand that the DCI indicating the terminal device to run the AI model 1 and the message 1 in S102 may be a same message. Alternatively, the DCI indicating the terminal device to run the AI model 1 and the activation message 1 in S104 may be a same message.

For the network device, after performing S103 (or performing S103 and S104), the network device performs S105.

S105: The network device determines an interruption period of the AI function 1 based on the interruption duration fed back by the terminal device.

For example, a start time point of the interruption period is described with reference to two implementations (that is, the following implementation 1 and implementation 2).

Implementation 1: The start time point of the interruption period is a time unit in which a predefined message is located. Alternatively, the start time point of the interruption period is a time unit agreed on by the terminal device and the network device.

One time unit may be one or more symbols, one or more slots (slots), one or more mini-slots (mini-slots), one or more subframes, one or more frames, one or more Ts, one or more Tc, or the like. In this embodiment of this application, the slot is used as an example to describe the time unit.

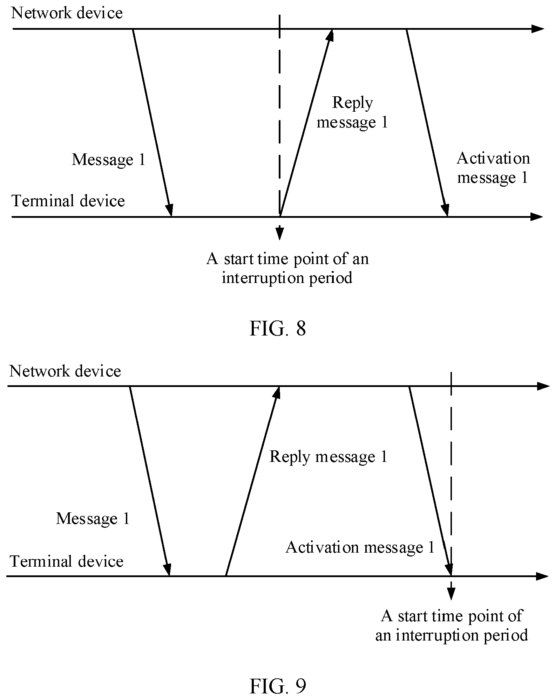

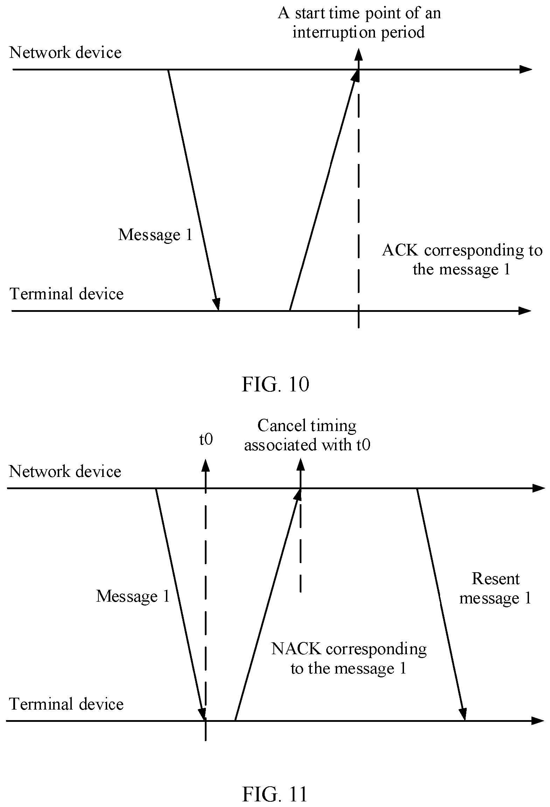

The predefined message includes one of the following:
a first predefined message, that is, the message 1, where for the message 1, refer to the description of S102, and details are not described herein again, that is, the network device and the terminal device use a slot in which the message 1 is located as a time unit in which the AI model 1 starts to be deployed in the terminal device, as shown in FIG. 7;
a second predefined message, that is, the reply message 1, where for the reply message 1, refer to the description of S103, and details are not described herein again, that is, the network device and the terminal device use a slot in which the reply message 1 is located as a time unit in which the AI model 1 starts to be deployed in the terminal device, as shown in FIG. 8;
a third predefined message, that is, the activation message 1, where for the activation message 1, refer to the description of S104, and details are not described herein again, that is, the network device and the terminal device use a slot in which the activation message 1 is located as a time unit in which the AI model 1 starts to be deployed in the terminal device, as shown in FIG. 9;
a fourth predefined message, that is, the ACK corresponding to the message 1, where for the ACK corresponding to the message 1, refer to the description of the ACK in S102, and details are not described herein again, that is, the network device and the terminal device use a slot in which the ACK corresponding to the message 1 is located as a time unit in which the AI model 1 starts to be deployed in the terminal device, as shown in FIG. 10;
a fifth predefined message, that is, the ACK corresponding to the reply message 1, where for the ACK corresponding to the reply message 1, refer to the description of the ACK in S103, and details are not described herein again, that is, the network device and the terminal device use a slot in which the ACK corresponding to the reply message 1 is located as a time unit in which the AI model 1 starts to be deployed in the terminal device; and
a sixth predefined message, the ACK corresponding to the activation message 1, where for the ACK corresponding to the activation message 1, refer to the description of the ACK in S104, and details are not described herein again, that is, the network device and the terminal device use a slot in which the ACK corresponding to the activation message 1 is located as a time unit in which the AI model 1 starts to be deployed in the terminal device.

It is easy to understand that, when the reply message 1 does not carry the interruption duration T1, the predefined message may also include a message that carries the interruption duration T1, which is denoted as, for example, a message X. In other words, the network device and the terminal device use a slot in which the message X is located as a time unit in which the AI model 1 starts to be deployed in the terminal device.

It is easy to understand that, as shown in FIG. 11, when the message 1 (or the activation message 1) is used as the start time point of the interruption period, after the network device sends the message 1 (or the activation message 1), it is considered that the terminal device starts to deploy the AI model 1 in the device, that is, the time unit in which the message 1 (or the activation message 1) is located is used as the start time point t0 of the interruption period, and timing starts. Then, if the terminal device sends a negative acknowledgment (negative acknowledgment, NACK) to the network device, the network device cancels the start time point t0 of the interruption period. In addition, the network device re-determines a start time point of the interruption period. For example, the network device resends the message 1 to the terminal device, and uses a time unit in which the resent message 1 is located as the start time point t0 of the interruption period.

It is easy to understand that, when the reply message 1 does not carry the interruption duration T1, the predefined message may also include a message that carries the interruption duration T1, which is denoted as, for example, a message X. In other words, the network device and the terminal device use a slot in which the message X is located as a time unit in which the AI model 1 starts to be deployed in the terminal device.

It is easy to understand that, as shown in FIG. 11, when the message 1 (or the activation message 1) is used as the start time point of the interruption period, after the network device sends the message 1 (or the activation message 1), it is considered that the terminal device starts to deploy the AI model 1 in the device, that is, the time unit in which the message 1 (or the activation message 1) is located is used as the start time point t0 of the interruption period, and timing starts. Then, if the terminal device sends a negative acknowledgment (negative acknowledgment, NACK) to the network device, the network device cancels the start time point t0 of the interruption period. In addition, the network device re-determines a start time point of the interruption period. For example, the network device resends the message 1 to the terminal device, and uses a time unit in which the resent message 1 is located as the start time point t0 of the interruption period.

It is easy to understand that, when the start time point of the interruption period is the time unit agreed on by the terminal device and the network device, the time unit agreed on by the terminal device and the network device indicates a time unit (or a time point) on which a common understanding is reached by the terminal device and the network device. For example, the network device may consider that the terminal device nominally starts to perform intra-device model deployment in the time unit, but whether the terminal device actually starts to perform intra-device model deployment in the time unit is not limited.

Implementation 2: The terminal device determines the start time point of the interruption period, and then the terminal device indicates the start time point to the network device. In other words, in addition to reporting the interruption duration, the terminal device further reports the start time point of the interruption period.

For example, when the reply message 1 indicates the interruption duration T1, the reply message 1 further indicates the start time point of the interruption period. The start time point indicated by the reply message 1 may be a time unit in which a predefined message is located. For the predefined message, refer to the description of the implementation 1 in S105. For example, the start time point indicated by the reply message 1 is the time unit in which the reply message 1 is located.

It is easy to understand that, when the reply message 1 indicates the interruption duration, and the terminal device starts to deploy the AI model 1 in the device when receiving the message 1, the interruption duration T1 indicated by the reply message 1 may be obtained by subtracting the duration between the message 1 and the reply message 1. For example, a slot in which the message 1 is located is denoted as a slot 1, a slot in which the reply message 1 is located is denoted as a slot 2, and the interruption duration is five slots. In this case, information about the interruption duration included in the reply message 1 is four slots.

It is easy to understand that the terminal device may report the interruption duration and the start time point to the network device based on a same message, or the terminal device may report the interruption duration and the start time point to the network device based on different messages. This is not limited in this embodiment of this application.

For the terminal device, within the interruption period of the AI function 1, the terminal device performs S106a or S106b.

S106a: The terminal device skips sending the first report to the network device within the interruption period of the AI function 1 according to a preconfigured rule. Correspondingly, the network device skips receiving the first report from the terminal device according to the preconfigured rule.

The first report is associated with the AI function 1.

For example, the AI function 1 may be the AI CSI feedback function, and the first report may be a CSI report determined by the terminal device using the AI model 1, and may be denoted as an AI CSI report.

In other words, within the interruption period of the AI function 1, the network device does not expect, according to the preconfigured rule, to enable the AI function 1, that is, the network device considers it normal to fail to receive the first report within this time period. Alternatively, even if the network device receives the first report within this time period (which may be a case in which the terminal device completes deployment of the AI model 1 in advance), the network device does not perform any processing.

S106b: The terminal device sends a second report to the network device within the interruption period of the AI function 1 according to a preconfigured rule. Correspondingly, the network device receives the second report from the terminal device according to the preconfigured rule.

The second report is not associated with the AI function 1.

For example, the AI function 1 may be the AI CSI feedback function, and the second report may be a conventional CSI reporting manner. For example, the terminal device determines a precoding matrix indicator (precoding matrix indicator, PMI) based on a channel feature, and indicates a precoding matrix to the network device based on the PMI. Alternatively, the second report is associated with another AI function. For example, the second report is associated with the AI function 2.

It is easy to understand that the conventional manner is not necessarily executed on the AI hardware, and an algorithm in the conventional manner is not necessarily complex. Therefore, even if the AI function 1 executed by the AI hardware is interrupted, the algorithm in the conventional manner can be normally executed. In addition, within the interruption period of the AI function 1, when the default reporting manner is empty, it may be considered that the algorithm in the conventional manner cannot be executed, that is, the network device does not expect to receive the first report. In this manner, the network device needs to learn of a capability of the terminal device in advance. For example, when reporting the capability of the terminal device, the terminal device notifies the network device that the algorithm in the conventional manner cannot be executed within the interruption period of the AI function 1.

S107: The terminal device sends the first report to the network device after the interruption period of the AI function 1. Correspondingly, the network device receives the first report from the terminal device.

For example, after the interruption period of the AI function 1, the deployment of the AI model 1 on the terminal device side is completed, and the AI model 1 starts to be used to determine the to-be-reported first report. Then, the terminal device sends the first report determined using the AI model 1 to the network device. Correspondingly, the network device considers that the deployment of the AI model 1 on the terminal device side is completed, and starts to receive the first report determined using the AI model 1.

The first report determined using the AI model 1 may be understood as that the AI model 1 directly outputs the first report, or the AI model 1 outputs an initial report, and the terminal device adjusts a parameter in the initial report to obtain the first report. This is not limited in this embodiment of this application.

It is easy to understand that, in this embodiment of this application, an example in which the interruption duration is accurate is used for description. To be specific, related steps are performed, for example, S105, S106, and S107 are performed, between the network device and the terminal device based on the accurate interruption duration. However, the following case may also exist: The interruption duration reported by the terminal device is inaccurate. For example, the interruption duration reported by the terminal device is less than actual duration in which the terminal device deploys the AI model 1 in the device. In other words, when the network device expects to use the AI model 1, the deployment of the AI model 1 on the terminal device side is not completed. In this case, the terminal device may send indication information to the network device, to indicate that the deployment of the AI model 1 is not completed, so that the network device does not enable the AI function 1 in advance.

### Embodiment 2

Embodiment 2 aims at a model switching scenario on a terminal device side, relates to a two-sided model, and corresponds to an AI CSI feedback function. As shown in FIG. 2, an AI model is obtained through separate training by the network device and the terminal device. For details, refer to the description of the Type3 two-sided separate training. In Embodiment 2, a terminal device reports interruption duration to a network device.

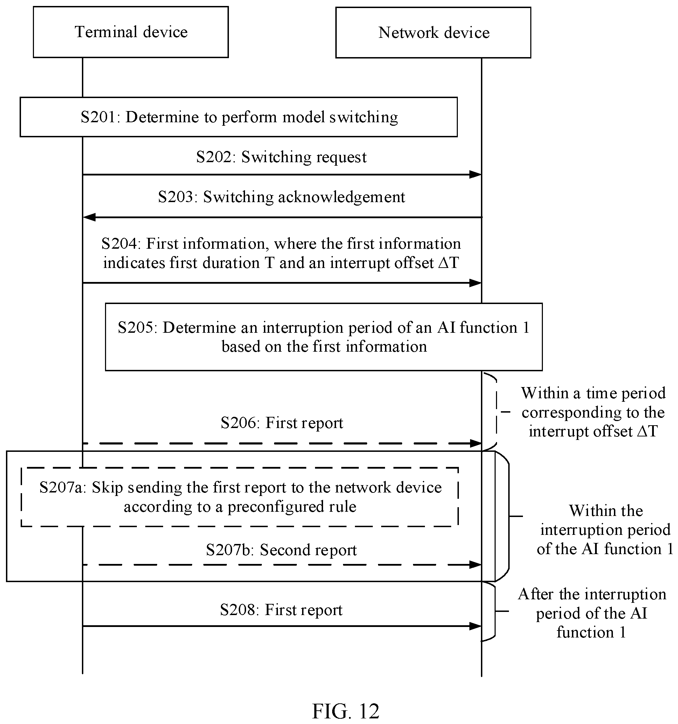

For example, as shown in FIG. 12, this embodiment includes the following steps.

S201: The terminal device determines to perform model switching.

The model switching indicates that the terminal device switches between different AI models corresponding to a same AI function.

For example, when the terminal device moves and switches from a scenario 1 to a scenario 2, or an object in a scenario in which the terminal device is located changes, the terminal device determines to switch from a currently used AI model. For details, refer to the description of the trigger factor of model switching. Details are not described herein again.

For the terminal device, after determining to perform model switching, the terminal device performs S202.

S202: The terminal device sends a switching request to the network device. Correspondingly, the network device receives the switching request from the terminal device.

The switching request is for requesting to switch from an AI model 2 (specifically, a part of the model 2 on the terminal device side, for example, an AI encoder) of an AI function 1 to an AI model 1 (specifically, a part of the model 1 on the terminal device side, for example, an AI encoder) of the AI function 1.

For example, the switching request includes information such as a model identifier and a version number of the AI model 1, and the AI function corresponding to the AI model 1. The AI function corresponding to the AI model 1 may be indicated by an RRC configuration of the AI function 1. For example, the AI function 1 is an AI CSI feedback function. The switching request includes an identifier, and the identifier indicates a configuration for reporting AI CSI.

For example, the switching request may be an RRC message, MAC-CE signaling, or UCI.

For the network device, after receiving the switching request, the network device performs S203.

S203: The network device sends a switching acknowledgment to the terminal device. Accordingly, the terminal device receives the switching acknowledgment from the network device.

The switching acknowledgment indicates to switch from the AI model 2 of the AI function 1 to the AI model 1 of the AI function 1.

For example, the switching acknowledgment may be an RRC message, MAC-CE signaling, or DCI.

For example, the AI function 1 is the AI CSI feedback function. The network device determines, based on the identifier of the AI model 1 in the switching request, whether a matched AI decoder is stored by the network device. If the AI decoder is stored, the network device sends the switching acknowledgment to the terminal device to indicate that the terminal device can switch from the AI model 2 to the AI model 1.

It is easy to understand that, in this embodiment of this application, when the network device has the AI model 1, if the network device further determines, with reference to another factor, not to switch to the AI model 1 temporarily, the network device may not perform S203. Correspondingly, the terminal device side does not perform model switching either.

It is easy to understand that, in this embodiment of this application, the network device and the terminal device may agree that after the network device performs S203, it indicates that the network device is going to use the AI model 1. In this case, the network device does not need to send an activation message to the terminal device. On the contrary, the network device and the terminal device may also agree that after the network device performs S203, it indicates that the network device has the AI model 1. When the network device determines that the AI model 1 needs to be used, the network device sends the activation message to the terminal device. For details, refer to the description of S104. Details are not described herein again.

For the terminal device, after receiving the switching acknowledgment, the terminal device performs S204.

S204: The terminal device sends first information to the network device. Correspondingly, the network device receives the first information from the terminal device.

The first information indicates first duration T and an interrupt offset ΔT.

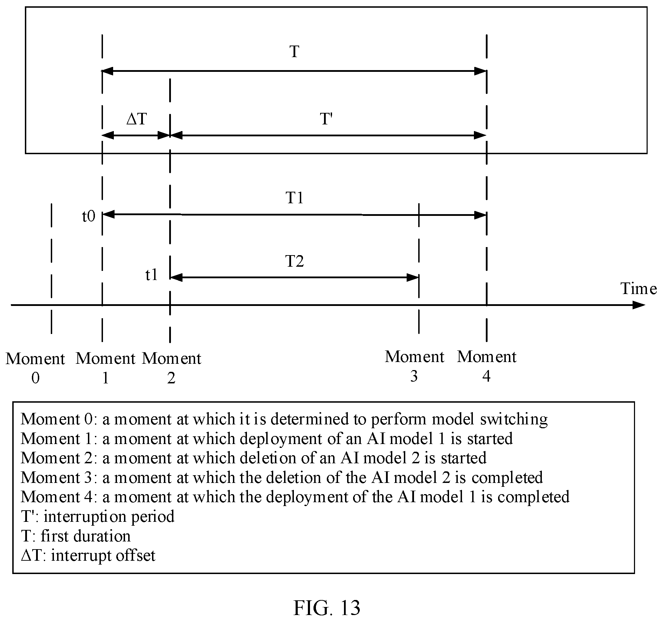

The first duration T indicates duration between a start moment and an end moment of model switching, as shown in FIG. 13, FIG. 14, or FIG. 15. The model switching indicates that the terminal device switches from the AI model 2 of the AI function 1 to the AI model 1 of the AI function 1. The start moment of the model switching indicates a time point agreed on by the terminal device and the network device (for example, a time point at which the terminal device starts to perform model switching). The end moment of the model switching indicates that the terminal device may determine, using the AI model after the switching, an earliest time point at which a first report is reported.

It is easy to understand that the two moments (that is, the start moment of the model switching and the end moment of the model switching) only need to ensure that the network device and the terminal device have a common understanding, that is, the network device and the terminal device both know one start moment and one end moment.

The start moment of the model switching may be nominal, that is, the network device considers that the terminal device starts to perform the model switching, to ensure that the network device and the terminal device have a common nominal understanding. However, in an actual case, for example, whether the terminal device actually starts the model switching at the start moment that is commonly understood is not limited. In other words, a start moment at which the terminal device actually performs the model switching may be the start moment commonly understood by the network device and the terminal device, or may not be the moment (that is, the start moment commonly understood by the network device and the terminal device).

Similarly, the end moment of model switching may also be nominal, that is, the network device considers that the model switching of the terminal device is completed, to ensure that the network device and the terminal device have a common nominal understanding. However, in an actual case, for example, whether the terminal device actually completes the model switching at the end moment that is commonly understood is not limited. In other words, an end moment at which the terminal device actually completes the model switching may be the end moment commonly understood by the network device and the terminal device, or may not be the moment (that is, the end moment commonly understood by the network device and the terminal device).

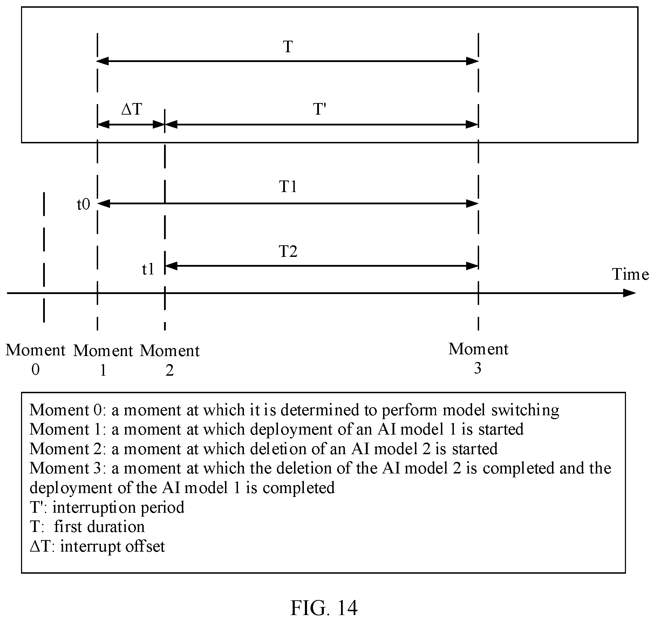

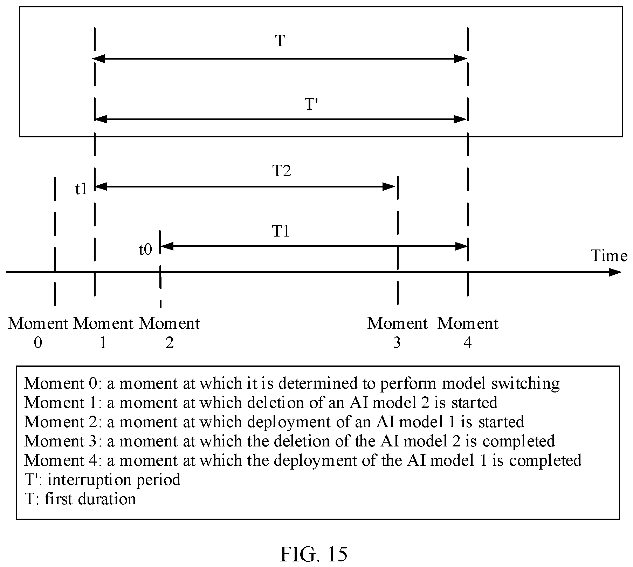

ΔT indicates an offset of the start moment of the model switching relative to a start time point of an interruption period. It is easy to understand that the interrupt offset ΔT may be greater than zero, as shown in FIG. 13 or FIG. 14. The interrupt offset ΔT may be equal to zero, and ΔT is not shown in FIG. 15.

It should be understood that, for the AI function 1, interruption duration T' of the interruption period is equal to T-ΔT.

For example, the first duration T is associated with duration T1 and duration T2. For example, the first duration T is determined based on the duration T1 and the duration T2. Similarly, the interrupt offset ΔT is associated with the duration T1 and the duration T2. For example, the interrupt offset ΔT is determined based on the duration T1 and the duration T2. Next, the duration T1 and the duration T2 are first described.

The duration T1 indicates duration from a time point at which the terminal device starts to deploy the AI model 1 in the device to a time point at which the terminal device completes deployment of the AI model 1. For example, the duration T1 is determined based on at least one of the following factors: a size of storage space occupied by the AI model 1, a structure of the AI model 1, or a hardware capability of the terminal device. For details, refer to the description of T1 in S103. Details are not described herein again.

FIG. 13 (or FIG. 14, or FIG. 15) is used as an example. A start time point of the duration T1 is denoted as t0. In other words, the terminal device starts to deploy the AI model 1 in the device at a moment corresponding to t0. After the duration T1, the terminal device completes the deployment of the AI model 1.

The duration T2 indicates duration from a time point at which the terminal device starts to delete the AI model 2 to a time point at which the terminal device completes deletion of the AI model 2. For example, the duration T2 may similarly be determined based on at least one of the following factors: a size of storage space occupied by the AI model 2, a structure of the AI model 2, or the hardware capability of the terminal device.

FIG. 13 (or FIG. 14, or FIG. 15) is used as an example. A start time point of the duration T2 is denoted as t1. In other words, the terminal device starts to delete the AI model 2 at a moment corresponding to t1. After the duration T2, the terminal device completes the deletion of the AI model 2.

It is easy to understand that, in this embodiment of this application, the duration T1 and the duration T2 may be the same or may be different. This is not limited in this embodiment of this application.

Then, a model switching process of the terminal device is described. For example, the model switching process of the terminal device includes the following two implementations (that is, the following implementation 1 and implementation 2).

Implementation 1: The terminal device first prepares to load the AI model 1 (that is, a new model), and then deletes the AI model 2 (that is, an old model). In this case, the start time point t0 of the duration T1 is earlier than the start time point t1 of the duration T2. Correspondingly, the duration T1 is greater than or equal to the duration T2, as shown in FIG. 13 or FIG. 14.

In the implementation 1 of the model switching, the first duration T indicates duration between the start moment and the end moment of the model switching. The start moment of the model switching indicates a moment at which the terminal device starts to deploy the AI model 1 in the device. The end moment of the model switching indicates a moment at which the terminal device completes the deployment of the AI model 1. FIG. 13 is used as an example. The first duration T is duration between a moment 1 and a moment 4. FIG. 14 is used as an example. The first duration T is duration between a moment 1 and a moment 3.

In the implementation 1 of the model switching, the interrupt offset ΔT indicates an offset of the start moment of the model switching relative to the start time point of the interruption period. The start time point of the interruption period indicates a moment at which the terminal device starts to delete the AI model 2. FIG. 13 or FIG. 14 is used as an example. The interrupt offset ΔT is duration between the moment 1 and a moment 2. In FIG. 14, ΔT=T1-T2.

In the implementation 1 of the model switching, the interruption duration T' indicates duration of the interruption period of the AI function 1. A start moment of the interruption duration T' indicates a moment at which the terminal device starts to delete the AI model 2. An end moment of the interruption duration T' indicates a moment at which the terminal device completes the deployment of the AI model 1. FIG. 13 is used as an example. The interruption duration T' is duration between the moment 2 and the moment 4. FIG. 14 is used as an example. The interruption duration T' is duration between the moment 2 and the moment 3.

Implementation 2: The terminal device first deletes the AI model 2 (that is, the old model), and then prepares to load the AI model 1 (that is, the new model). In this case, the start time point t0 of the duration T1 is later than the start time point t1 of the duration T2, as shown in FIG. 15. It is easy to understand that, in this case, the duration T1 may be greater than the duration T2, the duration T1 may be equal to the duration T2, or the duration T1 may be less than the duration T2. This is not limited in this embodiment of this application.

In the implementation 2 of the model switching, the first duration T indicates duration between the start moment and the end moment of the model switching. The start moment of the model switching indicates a moment at which the terminal device starts to delete the AI model 2. The end moment of the model switching indicates a moment at which the terminal device completes the deployment of the AI model 1. FIG. 15 is used as an example. The first duration T is duration between a moment 1 and a moment 4.

In the implementation 2 of the model switching, the interrupt offset ΔT indicates an offset of the start moment of the model switching relative to the start time point of the interruption period. The start time point of the interruption period is the same as the start moment of the model switching, both of which indicate a moment that the terminal device starts to delete the AI model 2. The interrupt offset ΔT is equal to 0, not shown in FIG. 15.

In the implementation 2 of the model switching, the interruption duration T' indicates duration of the interruption period of the AI function 1. A start moment of the interruption duration T' indicates a moment at which the terminal device starts to delete the AI model 2. An end moment of the interruption duration T' indicates a moment at which the terminal device completes the deployment of the AI model 1. FIG. 15 is used as an example. The interruption duration T' is duration between the moment 1 and the moment 4.

It should be noted that the moments in FIG. 13, FIG. 14, and FIG. 15, for example, the moment 1 to the moment 4, may be moments commonly agreed on by the terminal device and the network device, that is, nominal moments, the network device may consider that the terminal device performs corresponding behavior at these moments, that is, the terminal device and the network device reach a common understanding at these moments. However, in an actual case, whether the terminal device actually performs corresponding functions at these moments is not limited.

For example, the moment 1 in FIG. 13 is used as an example. The moment 1 indicates a moment at which the terminal device starts to deploy the AI model 1. In other words, the network device and the terminal device commonly consider that the terminal device starts to deploy the AI model 1 internally at the moment 1. However, a moment at which the terminal device actually deploys the AI model 1 internally may be the moment 1, or may be another moment. This is not limited in this embodiment of this application. Other moments may be deduced by analogy, and details are not described again.

It should be understood that the implementation 1 and the implementation 2 may be pre-agreed on by the network device and the terminal device, for example, an implementation used by the terminal device to report itself to the network device in a capability reporting process, and subsequently, the network device and the terminal device determine the start time point of the interruption period in an implementation of reporting.

Optionally, for the network device, after receiving the first information, the network device sends an ACK corresponding to the first information to the terminal device. Correspondingly, the terminal device receives the ACK corresponding to the first information from the network device. The ACK corresponding to the first information indicates that the network device successfully receives the first information.

For the network device, after receiving the first information, the network device performs S205.

S205: The network device determines the interruption period of the AI function 1 based on the first information.

For example, the start time point of the interruption period (of the AI function 1) is described by using four implementations (the following implementation 1 to implementation 4).

Implementation 1: The start time point of the interruption period is a time unit in which a predefined message is located. Alternatively, the start time point of the interruption period is a time unit agreed on by the terminal device and the network device.

For the time unit, refer to the description of S105. Details are not described herein again.

The predefined message includes one of the following:
a first predefined message, that is, the switching request, where for the switching request, refer to the description of S202, and details are not described herein again, that is, the network device and the terminal device use a slot in which the switching request is located as a time unit in which the AI function 1 starts to be interrupted, in which case a model switching manner may be the foregoing implementation 2, that is, the terminal device first deletes the AI model 2 (that is, the old model), and then prepares to load the AI model 1 (that is, the new model);
a second predefined message, that is, the switching acknowledgment, where for the switching acknowledgment, refer to the description of S203, and details are not described herein again, that is, the network device and the terminal device use a slot in which the switching acknowledgment is located as the time unit in which the AI function 1 starts to be interrupted;
a third predefined message, that is, a message carrying the first information, where for the first information, refer to the description of S204, and details are not described herein again, that is, the network device and the terminal device use a slot in which the first information is located as the time unit in which the AI function 1 starts to be interrupted;
a fourth predefined message, that is, the activation message 1, where for the activation message 1, refer to the description of S104, and details are not described herein again, that is, the network device and the terminal device use a slot in which the activation message 1 is located as the time unit in which the AI function 1 starts to be interrupted;
a fifth predefined message, that is, the ACK corresponding to the first information, where for the ACK corresponding to the first information, refer to the description of the ACK in S204, and details are not described herein again, that is, the network device and the terminal device use a slot in which the ACK corresponding to the first information is located as the time unit in which the AI function 1 starts to be interrupted;
a sixth predefined message, an ACK corresponding to the activation message 1, where for the ACK corresponding to the activation message 1, refer to the description of the ACK in S104, and details are not described herein again, that is, the network device and the terminal device use a slot in which the ACK corresponding to the activation message 1 is located as the time unit in which the AI function 1 starts to be interrupted;

It is easy to understand that, when the start time point of the interruption period is the time unit agreed on by the terminal device and the network device, for the time unit agreed on by the terminal device and the network device, refer to the description of S105 in Embodiment 1. Details are not described herein again.

Implementation 2: The terminal device determines the start time point of the interruption period, and then the terminal device indicates the start time point to the network device. In other words, in addition to reporting the first duration T and the interrupt offset ΔT, the terminal device further reports the start time point of the interruption period.

For example, when the first information indicates the first duration T and the interrupt offset ΔT, the first information further indicates the start time point of the interruption period. The start time point indicated by the first information may be a time unit in which a predefined message is located. For the predefined message, refer to the description of the implementation 1 in S205. For example, the start time point indicated by the first information is the time unit in which the first information is located.

Implementation 3: The start time point of the interruption period is determined based on the first duration T and the interrupt offset ΔT. A start time point of the first duration T is a time unit in which a predefined message is located. Alternatively, the start time point of the first duration T is a time unit agreed on by the terminal device and the network device. In other words, when knowing the start time point of the first duration T, the network device determines the start time point of the interruption period of the AI function 1 in combination with the interrupt offset ΔT.

For the time unit, refer to the description of S105. Details are not described herein again.

The predefined message includes one of the following:
a first predefined message, that is, the switching request, where for the switching request, refer to the description of S202, and details are not described herein again, that is, the network device and the terminal device use a slot in which the switching request is located as a time unit in which the first duration T starts,
a second predefined message, that is, the switching acknowledgment, where for the switching acknowledgment, refer to the description of S203, and details are not described herein again, that is, the network device and the terminal device use a slot in which the switching acknowledgment is located as the time unit in which the first duration T starts,
a third predefined message, that is, a message carrying the first information, where for the first information, refer to the description of S204, and details are not described herein again, that is, the network device and the terminal device use a slot in which the first information is located as the time unit in which the first duration T starts,
a fourth predefined message, that is, the activation message 1, where for the activation message 1, refer to the description of S104, and details are not described herein again, that is, the network device and the terminal device use a slot in which the activation message 1 is located as the time unit in which the first duration T starts,
a fifth predefined message, that is, the ACK corresponding to the first information, where for the ACK corresponding to the first information, refer to the description of the ACK in S204, and details are not described herein again, that is, the network device and the terminal device use a slot in which the ACK corresponding to the first information is located as the time unit in which the first duration T starts,
a sixth predefined message, an ACK corresponding to the activation message 1, where for the ACK corresponding to the activation message 1, refer to the description of the ACK in S104, and details are not described herein again, that is, the network device and the terminal device use a slot in which the ACK corresponding to the activation message 1 is located as the time unit in which the first duration T starts.

It is easy to understand that, when the start time point of the first duration T is the time unit agreed on by the terminal device and the network device, for the time unit agreed on by the terminal device and the network device, refer to the description of S105 in Embodiment 1. Details are not described herein again.

Implementation 4: The terminal device determines the start time point of the first duration T, and then the terminal device indicates the start time point of the first duration T to the network device. In other words, in addition to reporting the first duration T and the interrupt offset ΔT, the terminal device further reports the start time point of the first duration T.

For example, when the first information indicates the first duration T and the interrupt offset ΔT, the first information further indicates the start time point of the first duration T. The start time point indicated by the first information may be a time unit in which a predefined message is located. For the predefined message, refer to the description of the implementation 3 in S205. For example, the start time point indicated by the first information is the time unit in which the first information is located.

In this way, when knowing the start time point of the first duration T, the network device determines the start time point of the interruption period of the AI function 1 in combination with the interrupt offset ΔT.

It is easy to understand that a start time point of the interrupt offset ΔT is the same as the start time point of the first duration T1. In this way, the network device can determine, based on a value of the interrupt offset ΔT, a time period corresponding to the interrupt offset ΔT.

In a possible alternative manner, the first information may not indicate the first duration T and the interrupt offset ΔT, but indicate the duration T1 and the duration T2. For the duration T1 and the duration T2, refer to the descriptions of S204. Details are not described herein again.

Correspondingly, for a scenario in which model switching is performed in the implementation 1, as shown in FIG. 13 or FIG. 14, a process in which the network device determines the time period corresponding to the interrupt offset ΔT is as follows: The network device determines the start time point t1 of the duration T2 based on the duration T1, the duration T2, and the start time point t0 of the duration T1. t1=t0+(T1-T2).

For a scenario in which model switching is performed in the implementation 2, as shown in FIG. 15, a process in which the network device determines the time period corresponding to the interrupt offset ΔT is as follows: The network device determines the start time point t0 of the duration T1 based on the duration T1, the duration T2, and the start time point t1 of the duration T2. t0=t1+(T2-T1).

For the terminal device, after sending the first information, the terminal device performs S206.

S206: The terminal device sends the first report to the network device within the time period of the interrupt offset ΔT. Correspondingly, the network device receives the first report from the terminal device.

For example, within the time period of the interrupt offset ΔT, the AI model 2 runs normally. After determining the first report using the AI model 2, the terminal device sends the first report determined using the AI model 2 to the network device. In other words, a report determined using the AI model 1 is denoted as a report 1, and a report determined using the AI model 2 is denoted as a report 2. In S206 in this embodiment of this application, both the report 1 and the report 2 belong to the first report.

It is easy to understand that, in a possible alternative manner, the report determined using the AI model 1 is described as a first report, and the report determined using the AI model 2 is described as a third report. Correspondingly, S206 may be alternatively described as that the terminal device sends the third report to the network device within the time period of the interrupt offset ΔT. Correspondingly, the network device receives the third report from the terminal device.

The third report is still associated with the AI function 1, but the third report may be different from the first report. For example, measurement content configured in the first report is different from measurement content configured in the third report, reporting content configured in the first report is different from reporting content configured in the third report, and/or a quantity of feedback bits configured for the first report is different from a quantity of feedback bits configured for the third report.

For the terminal device, within the interruption period of the AI function 1, the terminal device performs S207a or S207b.

S207a: The terminal device skips sending the first report to the network device within the interruption period of the AI function 1 according to a preconfigured rule. Correspondingly, the network device skips receiving the first report from the terminal device according to the preconfigured rule.

For an implementation process of S207a, refer to the description of S106a. Details are not described herein again.

S207b: The terminal device sends a second report to the network device within the interruption period of the AI function 1 according to a preconfigured rule. Correspondingly, the network device receives the second report from the terminal device according to the preconfigured rule.

For an implementation process of S207b, refer to the description of S106b. Details are not described herein again.

It is easy to understand that, in this embodiment of this application, the start time point of the interruption period of the AI function 1 may also be understood as the start time point of the first duration T. In other words, within the time period corresponding to the interrupt offset ΔT, although the old model (that is, the AI model 2) can still be normally used, processing is still performed in a manner within the interruption period of the AI function 1. In other words, the interruption period of the AI function 1 includes the time period corresponding to the interrupt offset ΔT. Even within the time period corresponding to the interrupt offset ΔT, the terminal device performs S207a or S207b. Details are not described herein again. In this case, the first information may not indicate the duration T2. In other words, the first information indicates the duration T1, but does not indicate the duration T2.

For the terminal device, after the interruption period of the AI function 1, the terminal device performs S208.

S208: The terminal device sends the first report to the network device after the interruption period of the AI function 1. Correspondingly, the network device receives the first report from the terminal device.

For an implementation process of S208, refer to the description of S107. Details are not described herein again.

### Embodiment 3

Embodiment 3 aims at a model switching scenario on a terminal device side, and relates to a one-sided model. In addition, interruption duration of an AI function is bound to a capability of a terminal device. Then, a network device configures the interruption duration of the AI function for the terminal device based on the capability of the terminal device.

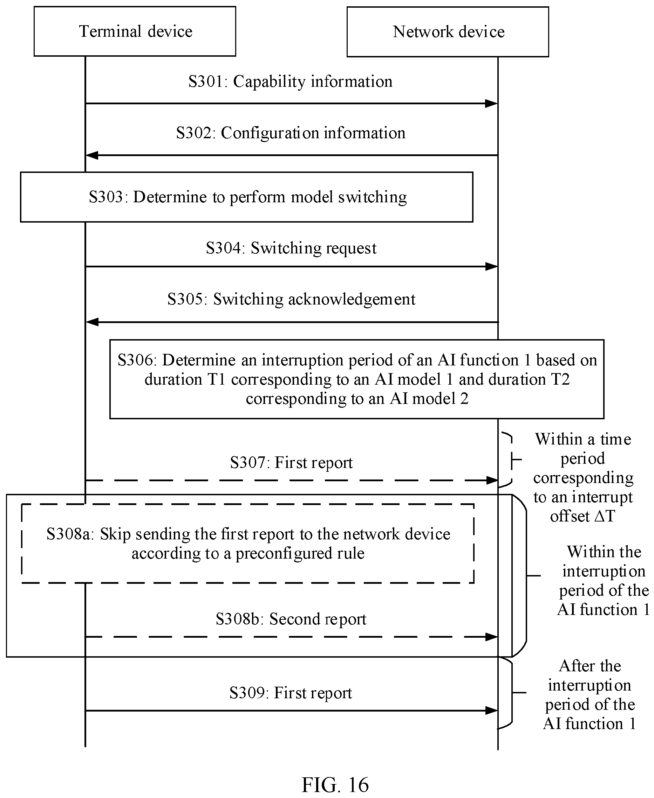

For example, as shown in FIG. 16, this embodiment includes the following steps.

S301: The terminal device sends capability information to the network device. Correspondingly, the network device receives the capability information from the terminal device.

For example, the capability information is described in two manners (the following manner 1 and manner 2).

Manner 1: The capability information indicates an AI capability level of the terminal device. The AI capability level indicated by the capability information corresponds to duration. The duration corresponding to the AI capability level indicated by the capability information is for determining interruption duration indicated by first information.

For example, the capability information indicates a first AI capability level. The first AI capability level is one of L AI capability levels. The L AI capability levels are capability levels of all terminal devices served by the network device, and may be AI capability levels predefined in a protocol. L is a positive integer.

For example, L=2. The L AI capability levels are denoted as a capability level 1 and a capability level 2. A correspondence between different capability levels and different duration is shown in Table 3.

**Table 3**

| | Duration T1 | Duration T2 |
|---|---|---|
| Capability level 1 | t11 | t21 |
| Capability level 2 | t12 | t22 |

In Table 3, when the first AI capability level indicated by the capability information is the capability level 1, the duration T1 is equal to t11, and the duration T2 is equal to t21. When the first AI capability level indicated by the capability information is the capability level 2, the duration T1 is equal to t12, and the duration T2 is equal to t22. For the duration T1 and the duration T2, refer to the descriptions in Embodiment 2. Details are not described herein again.

It is easy to understand that the foregoing correspondence (that is, the correspondence between different capability levels and different duration) is pre-agreed on by the network device and the terminal device, for example, predefined in a protocol. Duration corresponding to different capability levels may be the same or may be different. For example, for the duration T1, t11 and t12 may be the same or may be different. This is not limited in this embodiment of this application.

It is easy to understand that the L AI capability levels are the AI capability levels of all the terminal devices served by the network device, for example, predefined in a protocol. For example, at a moment, the network device serves five terminal devices, which are respectively denoted as a terminal device 1 to a terminal device 5. In the five terminal devices, each terminal device has a different AI capability level. Correspondingly, L=5. If the terminal device that performs S301 is the terminal device 1 in the five terminal devices, the first AI capability level is one of the five AI capability levels. Certainly, in the terminal devices served by the network device, AI capability levels of different terminal devices may be the same or may be different. This is not limited in this embodiment of this application.

Manner 2: The capability information indicates duration T1 and duration T2. For the duration T1 and the duration T2, refer to the descriptions in Embodiment 2. Details are not described herein again. In this case, it may be understood that the terminal device uses the same duration T1 for different AI models. Similarly, the terminal device uses the same duration T2 for different AI models.

S302: The network device sends configuration information to the terminal device. Correspondingly, the terminal device receives the configuration information from the network device.

The configuration information includes information about at least one AI model, and duration T1 and duration T2 of each of the at least one AI model.

For example, the AI function 1 corresponds to two AI models, and the configuration information includes the following information: an identifier of an AI model 1, duration T1 corresponding to the AI model 1, duration T2 corresponding to the AI model 1, an identifier of an AI model 2, duration T1 corresponding to the AI model 2, and duration T2 corresponding to the AI model 2. In this way, the terminal device may perform inference using the AI model 1 or the AI model 2, to obtain a first report.

Optionally, the duration T1 indicated in the configuration information is determined based on the capability information. For example, the duration T1 indicated in the configuration information is equal to the duration t11 bound to the capability level 1. Alternatively, the duration T1 indicated in the configuration information is greater than the duration t11 bound to the capability level 1. Similarly, the duration T2 indicated in the configuration information is also determined based on the capability information.

Optionally, the configuration information further indicates a reporting manner within an interruption period, for example, a conventional reporting manner. For example, for beam measurement, the conventional reporting manner includes: The terminal device selects, from beam measurement results, a beam with an optimal measurement result. For details, refer to a related technology. Details are not described herein.

It is easy to understand that the reporting manner within the interruption period may alternatively be predefined. For example, a communication protocol between the network device and the terminal device predefines that the first report is not reported within the interruption period. In this case, the configuration information may not indicate the reporting manner within the interruption period.

It is easy to understand that S302 is an optional step. In other words, the network device may not send the configuration information, that is, does not perform S302. In this case, the network device and the terminal device determine the interruption duration based on the interruption duration corresponding to the capability level (for example, the capability level indicated by the capability information).

For the terminal device, after receiving the configuration information, the terminal device performs inference using an AI model indicated by the configuration information, for example, the AI model 1, to obtain an inference result, and reports the inference result obtained using the AI model 1 to the network device. At a moment, the terminal device performs S303.

S303: The terminal device determines to perform model switching.

For an implementation process of S303, refer to the description of S201. Details are not described herein again.

S304: The terminal device sends a switching request to the network device. Correspondingly, the network device receives the switching request from the terminal device.

For an implementation process of S304, refer to the description of S202. Details are not described herein again.

It should be understood that, in a one-sided model scenario, if model switching occurs, and an output of the AI model does not change after the switching, the AI model after the switching does not affect an inference result. However, output results of different AI models may vary, for example, parameter distributions are different. To capture these changes in time by the network device, a network device side still needs to learn of a model status of the terminal device side, that is, whether a new model is used. Therefore, in Embodiment 3 of this application, the terminal device requests model switching from the network device by using S304.

S305: The network device sends a switching acknowledgment to the terminal device. Accordingly, the terminal device receives the switching acknowledgment from the network device.

The switching acknowledgment indicates to switch from the AI model 2 of the AI function 1 to the AI model 1 of the AI function 1.

For example, the switching acknowledgment may be an RRC message, MAC-CE signaling, or DCI.

For the terminal device, after receiving the switching acknowledgment, the terminal device performs model switching. For an implementation of the model switching, refer to the description of S204. Details are not described herein again.

S306: The network device determines an interruption period of the AI function 1 based on the duration T1 corresponding to the AI model 1 and the duration T2 corresponding to the AI model 2.

For example, a start time point of the interruption period is a time unit in which a predefined message is located.

For the time unit, refer to the description of S105. Details are not described herein again.

The predefined message includes one of the following:
a first predefined message, that is, the switching request, where for details, refer to the description of S304, and details are not described herein again; and
a second predefined message, that is, the switching acknowledgment, where for details, refer to the description of S305, and details are not described herein again.

Alternatively, the start time point of the interruption period is a time unit agreed on by the terminal device and the network device. For details, refer to the description of S105 in Embodiment 1. Details are not described herein again.

For example, the interruption duration T' of the interruption period is determined based on the implementation of the model switching, the duration T1, and the duration T2. Details are as follows:
For a scenario in which the model switching is performed in the implementation 1, for T', refer to FIG. 13 or FIG. 14. Correspondingly, a process in which the network device determines a time period corresponding to an interrupt offset ΔT is as follows: The network device determines a start time point t1 of the duration T2 based on the duration T1, the duration T2, and a start time point t0 of the duration T1. t1=t0+(T1-T2).

For a scenario in which the model switching is performed in the implementation 2, for T', refer to FIG. 15. Correspondingly, a process in which the network device determines a time period corresponding to an interrupt offset ΔT is as follows: The network device determines a start time point t0 of the duration T1 based on the duration T1, the duration T2, and a start time point t1 of the duration T2. t0=t1+(T2-T1).

For the terminal device, after receiving the switching acknowledgment, the terminal device performs S307.

S307: The terminal device sends the first report to the network device within the time period of the interrupt offset ΔT. Correspondingly, the network device receives the first report from the terminal device.

For an implementation process of S307, refer to the description of S206. Details are not described herein again.

It is easy to understand that, in a possible alternative manner, within the time period of the interrupt offset ΔT, the AI model 2 runs normally. After determining a third report using the AI model 2, the terminal device sends the third report determined using the AI model 2 to the network device. Correspondingly, S307 may be alternatively described as that the terminal device sends the third report to the network device within the time period of the interrupt offset ΔT. Correspondingly, the network device receives the third report from the terminal device. For details, refer to the description in the alternative description in S206. Details are not described herein again.

For the terminal device, within the interruption period of the AI function 1, the terminal device performs S308a or S308b.

S308a: The terminal device skips sending the first report to the network device within the interruption period of the AI function 1 according to a preconfigured rule. Correspondingly, the network device skips receiving the first report from the terminal device according to the preconfigured rule.

For an implementation process of S308a, refer to the description of S106a. Details are not described herein again.

S308b: The terminal device sends a second report to the network device within the interruption period of the AI function 1 according to a preconfigured rule. Correspondingly, the network device receives the second report from the terminal device according to the preconfigured rule.

For an implementation process of S308b, refer to the description of S106b. Details are not described herein again.

It is easy to understand that, in this embodiment of this application, the start time point of the interruption period of the AI function 1 may also be understood as the start time point of the first duration T. In other words, within the time period corresponding to the interrupt offset ΔT, although the old model (that is, the AI model 2) can still be normally used, processing is still performed in a manner within the interruption period of the AI function 1. In other words, the interruption period of the AI function 1 includes the time period corresponding to the interrupt offset ΔT. Even within the time period corresponding to the interrupt offset ΔT, the terminal device performs S308a or S308b. Details are not described herein again. In this case, the network device may not configure the duration T2. In other words, the configuration information includes the information about the at least one AI model and the duration T1 of each of the at least one AI model, but does not include the duration T2 of each of the at least one AI model.

For the terminal device, after the interruption period of the AI function 1, the terminal device performs S309.

S309: The terminal device sends the first report to the network device after the interruption period of the AI function 1. Correspondingly, the network device receives the first report from the terminal device.

For an implementation process of S309, refer to the description of S107. Details are not described herein again.

It is easy to understand that, in Embodiment 3 of this application, duration (for example, the duration T1 and the duration T2) configured by the network device may be longer. In this case, the model deployment and switching may have been completed on the terminal device side, and the AI model can be used normally. However, if the configured duration does not expire, that is, the network device still considers that the AI function 1 is still in the interruption period, in the manner of S308a, the network device still does not expect to receive any result, or even if the terminal device sends the first report, the network device does not process the first report.

### Embodiment 4

Embodiment 4 aims at a scenario with model transmission, that is, an AI model is separately trained on a network device side or a terminal device side, and the entire AI model or a part of the AI model is transmitted to a peer side through an air interface. This scenario is applicable to a two-sided model or a one-sided model. In Embodiment 4, a terminal device reports interruption duration to a network device.

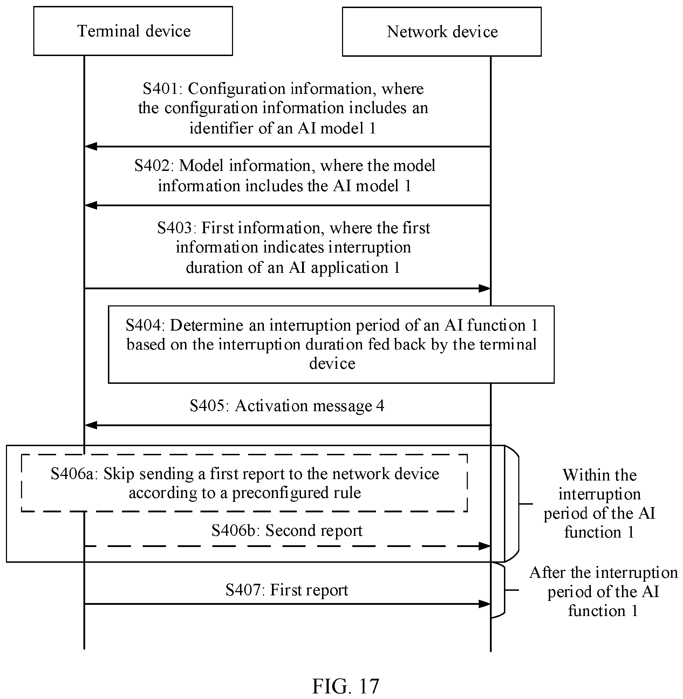

For example, as shown in FIG. 17, this embodiment includes the following steps.

S401: The network device sends configuration information to the terminal device. Correspondingly, the terminal device receives the configuration information from the network device.

The configuration information includes an identifier of an AI model 1, to configure the terminal device to enable an AI function 1 corresponding to the AI model 1.

For example, the AI function 1 is an AI CSI feedback function, and the AI model 1 may be an AI CSI model. The configuration information includes the identifier of the AI CSI model, to configure the terminal device to perform AI-based CSI reporting.

S402: The network device sends model information to the terminal device. Correspondingly, the terminal device receives the model information from the network device.

The model information includes the AI model 1.

For example, the AI function 1 is the AI CSI feedback function, and the AI model 1 may be a two-sided model, as shown in FIG. 2. In this case, the AI model 1 may be an AI encoder (optionally, further including a quantizer), and the network device transmits an encoder part of the AI model 1 to the terminal device through the air interface.

For example, an implementation in which the AI model 1 is transmitted through the air interface is described as follows:
The network device uses the AI model 1 as application data, and sends the application data to the terminal device in a user plane data transmission manner. Alternatively, the network device sends the AI model 1 to the terminal device based on wireless signaling, for example, configures the AI model 1 for the terminal device based on an RRC message.

For example, a definition of the AI model 1 includes a structure of the model and a parameter of the model. For example, an application layer description manner is used, and a language of an AI framework (such as TensorFlow and ONNX) is used for description. For another example, a language defined in 3GPP is used for description, and RRC signaling is used for description.

For example, the model information indicates the structure of the AI model 1 and the parameter of the AI model 1, so that the terminal device obtains the AI model 1. Alternatively, in an alternative manner, the model information includes a compiled AI model 1, or the model information includes a model image or an executable file (which may be similar to an exe file) that is readily used.

For the terminal device, after receiving the configuration information and the model information, the terminal device performs S403.

S403: The terminal device sends first information to the network device. Correspondingly, the network device receives the first information from the terminal device.

The first information indicates interruption duration of the AI function 1. The interruption duration in the first information indicates duration of an interruption period of the AI function 1. In other words, the interruption duration in the first information indicates duration required by the terminal device to deploy the AI model 1 on the device, for example, duration from a time point at which the AI model 1 starts to be deployed in the device to a time point at which deployment of the AI model 1 is completed.

Alternatively, the interruption duration in the first information indicates duration between a start moment and an end moment. The start moment indicates a start moment agreed on by the terminal device and the network device, for example, a nominal moment at which the terminal device starts to deploy the AI model 1 in the device. The end moment indicates an end moment agreed on by the terminal device and the network device, for example, a nominal moment at which the terminal device can determine or send a first report using the AI model 1.

It is easy to understand that, in Embodiment 4 of this application, the AI model 1 is sent by the network device to the terminal device. Therefore, the interruption duration may mainly include time for compilation and model loading, and does not include time for reading the model from the memory. If the model information sent by the network device to the terminal device indicates the structure and the parameter of the AI model 1, time for the terminal device to perform compilation may be long. If the model information sent by the network device to the terminal device includes an image file of the AI model 1, the terminal device may save compilation time, but there may still be a period of time for deploying the image file.

For the network device, after receiving the first information, the network device performs S404.

S404: The network device determines the interruption period of the AI function 1 based on the interruption duration fed back by the terminal device.

For an implementation process of S404, refer to the description of S105. Details are not described herein again.

Optionally, for the network device, after receiving the first information, the network device determines that the terminal device side has received the AI model 1. The network device further performs S405.

S405: The network device sends an activation message 4 to the terminal device. Correspondingly, the terminal device receives the activation message 4 from the network device.

For an implementation process of S405, refer to the description of S105. Details are not described herein again.

It is easy to understand that, after performing S404, the network device sends the activation message 4 after the interruption period of the AI function 1, to activate the AI model 1. Alternatively, after S403 is performed, the network device first performs S405, and then performs S404. This is not limited in this embodiment of this application.

For the terminal device, within the interruption period of the AI function 1, the terminal device performs S406a or S406b.

S406a: The terminal device skips sending the first report to the network device within the interruption period of the AI function 1 according to a preconfigured rule. Correspondingly, the network device skips receiving the first report from the terminal device according to the preconfigured rule.

For an implementation process of S406a, refer to the description of S106a. Details are not described herein again.

S406b: The terminal device sends a second report to the network device within the interruption period of the AI function 1 according to a preconfigured rule. Correspondingly, the network device receives the second report from the terminal device according to the preconfigured rule.

For an implementation process of S406b, refer to the description of S106b. Details are not described herein again.

S407: The terminal device sends the first report to the network device after the interruption period of the AI function 1. Correspondingly, the network device receives the first report from the terminal device.

For an implementation process of S407, refer to the description of S107. Details are not described herein again.

### Embodiment 5

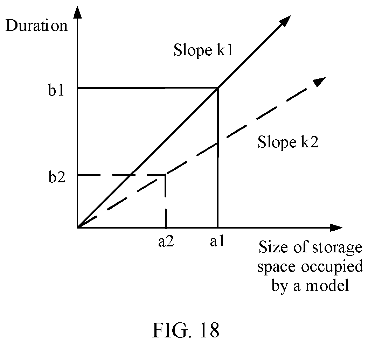

In Embodiment 5, it is considered that interruption duration of an AI function is usually directly associated with a size of storage space occupied by an AI model. Therefore, a terminal device may provide a network device with the size of the storage space occupied by the model, so that the network device learns of the interruption duration of the AI function. For example, the size of the storage space occupied by the AI model and the duration meet a linear relationship, as shown in FIG. 18. A slope of the linear relationship is associated with a hardware capability of the terminal device. It can be learned from FIG. 18 that a smaller slope indicates shorter interruption duration of the AI function when sizes of occupied storage space are the same. A slope k1 indicates a processing capability of the terminal device in deploying the AI model. A slope k2 indicates a processing capability of the terminal device in deleting the AI model.

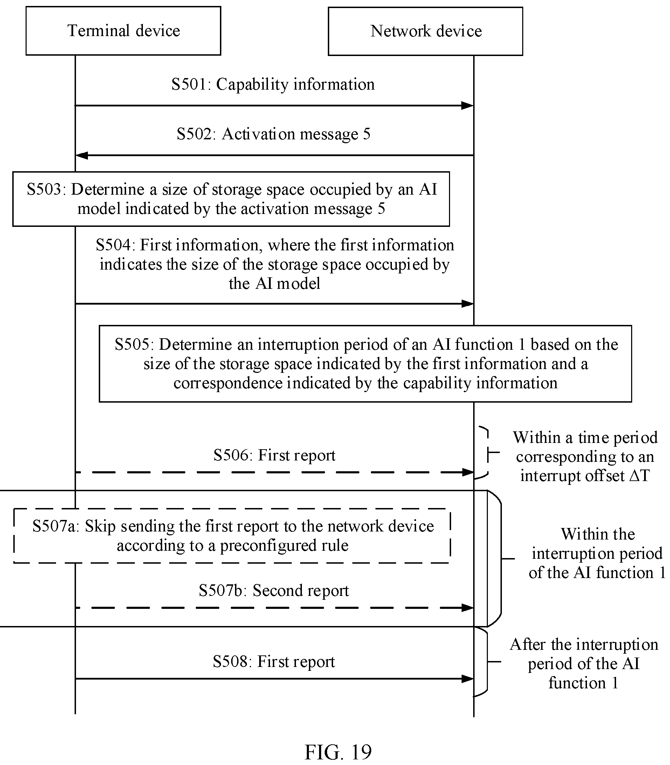

For example, as shown in FIG. 19, this embodiment includes the following steps.

S501: The terminal device sends capability information to the network device. Correspondingly, the network device receives the capability information from the terminal device.

The capability information indicates a relationship between a size of storage space occupied by a model and duration.

FIG. 18 is used as an example. In a model deployment scenario, the capability information indicates the slope k1.

For example, the capability information includes the slope k1. Alternatively, the slope k1 may be quantized, and the capability information includes a quantized value of the slope k1.

For another example, the capability information includes a level value. Different level values correspond to different slope values, as shown in Table 4.

**Table 4**

| Level | Slope k1 | Slope k2 |
|---|---|---|
| 1 | 2.5 | 1.5 |
| 2 | 3.5 | 2.5 |
| 3 | 4.5 | 3.5 |

In Table 4, when the level value included in the capability information is 1, the network device may learn that the slope k1 is equal to 2.5. When the level value included in the capability information is 2, the network device may learn that the slope k1 is equal to 3.5. Others may be deduced by analogy, and details are not described again.

It is easy to understand that a correspondence between a level value and a slope value may be information pre-agreed on by the network device and the terminal device.

When the capability information indicates the slope k1, after learning of the size of the storage space occupied by the model, the network device may determine duration T1 based on the slope k1. In the AI model deployment scenario, the duration T1 is equal to the interruption duration of the AI function. For details, refer to the description in Embodiment 1. Details are not described herein again.

Optionally, in a model switching scenario, the capability information further indicates the slope k2, so that when learning of the size of the storage space occupied by the model, the network device determines the duration T2 based on the slope k2, and then determines the interruption duration of the AI function with reference to the duration T1. For details, refer to the descriptions in Embodiment 2 to Embodiment 4. Details are not described herein again.

For example, that the capability information indicates the slope k2 may be specifically implemented as follows: The capability information includes the slope k2, or the capability information includes a quantized value of the slope k2, or the capability information includes a level value corresponding to the slope k2.

S502: The network device sends an activation message 5 to the terminal device. Correspondingly, the terminal device receives the activation message 5 from the network device.

For an implementation process of S502, refer to the description of S104. Details are not described herein again.

Optionally, after performing S501 and before performing S502, the network device may further perform a step related to model query. For details, refer to the descriptions of S102 and S103. Details are not described herein again.

For the terminal device, after receiving the activation message 5, the terminal device performs S503.

S503: The terminal device determines a size of storage space occupied by an AI model indicated by the activation message 5.

For example, the activation message 5 indicates to activate the AI model 1. In this case, the terminal device determines the size of the storage space occupied by the AI model 1.

S504: The terminal device sends first information to the network device. Correspondingly, the network device receives the first information from the terminal device.

The first information indicates the size of the storage space occupied by the AI model.

For example, the first information includes the size of the storage space occupied by the AI model, for example, X Mbytes. Alternatively, the size of the storage space occupied by the AI model may be quantized. Correspondingly, the first information includes a quantized value of the size of the storage space occupied by the AI model.

For another example, the first information includes a level value. Different level values correspond to different sizes of storage space, as shown in Table 5.

**Table 5**

| Level value | Size of storage space occupied by a model (unit: Mbyte) |
|---|---|
| 1 | 2.5 |
| 2 | 3.5 |
| 3 | 4.5 |

In Table 5, when the level value included in the first information is 1, the network device may learn that the size of the storage space occupied by the AI model is equal to 2.5 Mbytes. When the level value included in the first information is 2, the network device may learn that the size of the storage space occupied by the AI model is equal to 3.5 Mbytes. Others may be deduced by analogy, and details are not described again.

It is easy to understand that a correspondence between a level value and a size of storage space occupied by a model may be information pre-agreed on by the network device and the terminal device.

For example, the first information may be carried in an RRC message, MAC-CE signaling, or UCI. This is not limited in this embodiment of this application. Alternatively, the first information may be carried in dedicated signaling. This is not limited in this embodiment of this application.

For the network device, after receiving the first information, the network device performs S505.

S505: The network device determines an interruption period of an AI function 1 based on the size of the storage space indicated by the first information and a correspondence indicated by the capability information.

For example, the size of the storage space indicated by the first information is denoted as a1, the slope indicated by the capability information is denoted as k1, and the duration T1 determined by the network device is equal to b1, as shown in FIG. 18.

For example, a start time point of the interruption period of the AI function 1 is a time unit in which a predefined message is located.

For the time unit, refer to the description of S105. Details are not described herein again.

The predefined message includes one of the following:
a first predefined message, that is, a message carrying the first information, where for the first information, refer to the description of S504, and details are not described herein again, that is, the network device and the terminal device use a slot in which the first information is located as the time unit in which the AI function 1 starts to be interrupted;
a second predefined message, that is, an ACK corresponding to the first information, where for the ACK corresponding to the first information, refer to the description of the ACK in S204, and details are not described herein again, that is, the network device and the terminal device use a slot in which the ACK corresponding to the first information is located as the time unit in which the AI function 1 starts to be interrupted.

Alternatively, the start time point of the interruption period of the AI function 1 is a time unit agreed on by the terminal device and the network device. For details, refer to the description of S105 in Embodiment 1. Details are not described herein again.

Implementation 2: The terminal device determines the start time point of the interruption period, and then the terminal device indicates the start time point to the network device. In other words, in addition to reporting the size of the storage space occupied by the AI model, the terminal device further reports the start time point of the interruption period.

For example, when the first information indicates the size of the storage space occupied by the AI model, the first information further indicates the start time point of the interruption period. The start time point indicated by the first information may be a time unit in which a predefined message is located. For the predefined message, refer to the description of the implementation 1 in S505. For example, the start time point indicated by the first information is the time unit in which the first information is located.

Optionally, in the model switching scenario, for the terminal device, after sending the first information, the terminal device performs S506.

S506: The terminal device sends a first report to the network device within a time period of an interrupt offset ΔT. Correspondingly, the network device receives the first report from the terminal device.

For an implementation process of S506, refer to the description of S206. Details are not described herein again.

It is easy to understand that, in a possible alternative manner, within the time period of the interrupt offset ΔT, an old model (for example, an AI model 2) runs normally. After determining a third report using the AI model 2, the terminal device sends the third report determined using the AI model 2 to the network device. Correspondingly, S506 may be alternatively described as that the terminal device sends the third report to the network device within the time period of the interrupt offset ΔT. Correspondingly, the network device receives the third report from the terminal device. For details, refer to the description in the alternative description in S206. Details are not described herein again.

In the model deployment or model switching scenario, for the terminal device, after sending the first information, the terminal device performs S507a or S507b.

S507a: The terminal device skips sending the first report to the network device within the interruption period of the AI function 1 according to a preconfigured rule. Correspondingly, the network device skips receiving the first report from the terminal device according to the preconfigured rule.

For an implementation process of S507a, refer to the description of S106a. Details are not described herein again.

S507b: The terminal device sends a second report to the network device within the interruption period of the AI function 1 according to a preconfigured rule. Correspondingly, the network device receives the second report from the terminal device according to the preconfigured rule.

For an implementation process of S507b, refer to the description of S106b. Details are not described herein again.

S508: The terminal device sends the first report to the network device after the interruption period of the AI function 1. Correspondingly, the network device receives the first report from the terminal device.

For an implementation process of S508, refer to the description of S107. Details are not described herein again.

### Embodiment 6

Embodiment 6 aims at a model switching scenario on a terminal device side, relates to a two-sided model, and corresponds to an AI CSI feedback function. As shown in FIG. 2, an AI model is obtained through separate training by the network device and the terminal device. For details, refer to the description of the Type3 two-sided separate training. In Embodiment 6, a network device configures or indicates an offset value of an interruption period, to implement more flexible control.

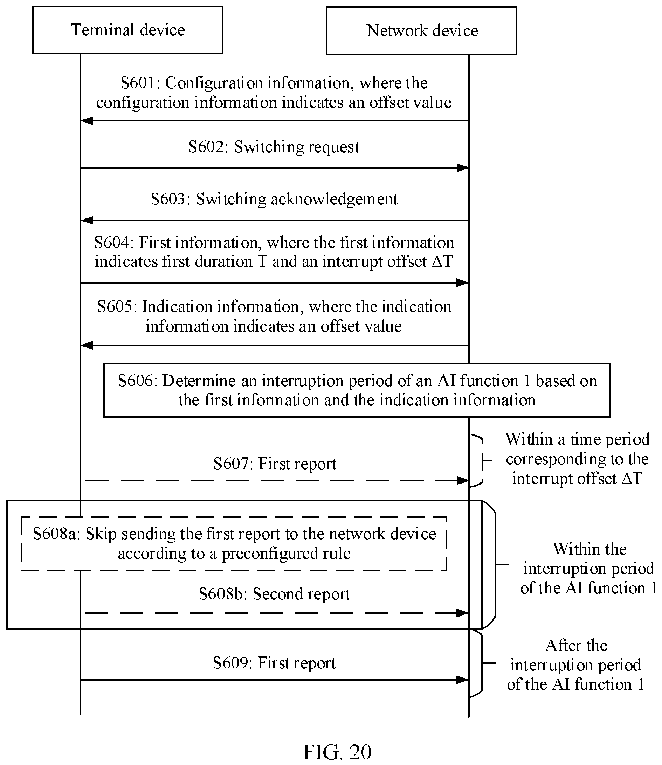

For example, as shown in FIG. 20, this embodiment includes the following steps.

S601: The network device sends configuration information to a terminal device. Correspondingly, the terminal device receives the configuration information from the network device.

The configuration information indicates the offset value.

For example, in an AI model deployment scenario, the configuration information is an interruption period indicating an offset value. For example, the configuration information includes an offset value list 1. The offset value list 1 includes a plurality of offset values, and all offset values in the offset value list 1 are offset values of the interruption period. For an interruption period of an AI function 1, refer to the description in Embodiment 1. Details are not described herein again.

For example, in an AI model switching scenario, the configuration information indicates an offset value of duration T1 and an offset value of duration T2. For example, the configuration information includes an offset value list 1 and an offset value list 2. The offset value list 1 includes a plurality of offset values, and each offset value in the offset value list 1 indicates an offset value of the duration T1. The offset value list 2 includes a plurality of offset values, and each offset value in the offset value list 2 indicates an offset value of the duration T2. For the duration T1 and the duration T2, refer to the descriptions in Embodiment 2. Details are not described herein again.

For the terminal device, after receiving the configuration information, the terminal device determines, at a moment, to perform model switching. Correspondingly, the terminal device performs S602.

S602: The terminal device sends a switching request to the network device. Correspondingly, the network device receives the switching request from the terminal device.

The switching request is for requesting to switch from an AI model 2 (specifically, a part of a model 2 on the terminal device side, for example, an AI encoder) of the AI function 1 to an AI model 1 (specifically, a part of a model 1 on the terminal device side, for example, an AI encoder) of the AI function 1.

For an implementation process of S602, refer to the description of S202. Details are not described herein again.

For the network device, after receiving the switching request, the network device performs S603.

S603: The network device sends a switching acknowledgment to the terminal device. Accordingly, the terminal device receives the switching acknowledgment from the network device.

The switching acknowledgment indicates to switch from the AI model 2 of the AI function 1 to the AI model 1 of the AI function 1.

For an implementation process of S603, refer to the description of S203. Details are not described herein again.

For the terminal device, after receiving the switching acknowledgment, the terminal device performs S604.

S604: The terminal device sends first information to the network device. Correspondingly, the network device receives the first information from the terminal device.

The first information indicates first duration T and an interrupt offset ΔT.

For an implementation process of S604, refer to the description of S204. Details are not described herein again.

For the network device, after receiving the first information, the network device performs S605.

S605: The network device sends indication information to the terminal device. Correspondingly, the terminal device receives the indication information from the network device.

The indication information indicates an offset value. It is easy to understand that the offset value indicated by the indication information may be a value in a plurality of offset values configured based on the configuration information. For example, the indication information is described with reference to two implementations (the following implementation 1 and implementation 2).

Implementation 1: The indication information is first indication information. The first indication information indicates a first offset value, and the first offset value indicates an offset of a start time point of the interruption period relative to a reference time unit. The reference time unit includes a time unit in which the first indication information is located, or the reference time unit includes a time unit in which a predefined message is located. For the predefined message, refer to the descriptions in Embodiment 1 to Embodiment 5. Details are not described herein again.

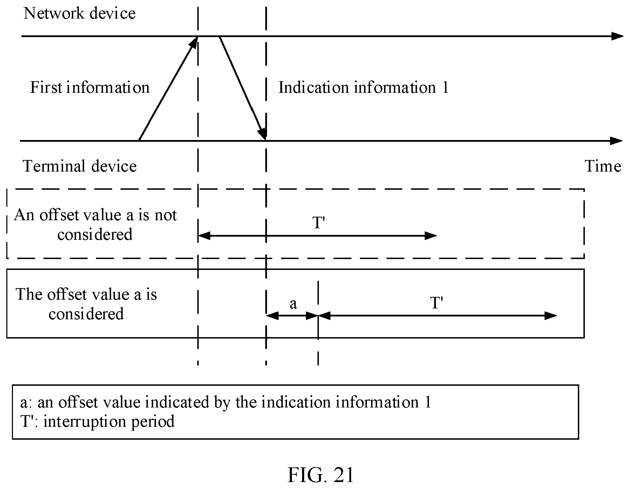

FIG. 21 is used as an example. The first indication information is indication information 1, the indication information 1 indicates an offset value a, the offset value a is an offset of a start time point of the interruption period relative to a reference time unit, and the reference time unit is a time unit in which the indication information 1 is located.

As shown in a dashed-line box in FIG. 21, when the offset value a is not considered, the start time point of the interruption period T is a time unit in which the first information is located.

As shown in a solid-line box in FIG. 21, when the offset value a is considered, the start time point of the interruption period T has a specific offset, that is, a backward offset of duration a relative to the time unit in which the indication information 1 is located.

Implementation 2: The indication information is second indication information. The second indication information indicates a second offset value, and the second offset value indicates an offset of a start time point of the first duration T relative to a reference time unit. The reference time unit includes a time unit in which the second indication information is located, or the reference time unit includes a time unit in which a predefined message is located. For the first duration T, refer to the description in Embodiment 2. For the predefined message, refer to the descriptions in Embodiment 1 to Embodiment 5. Details are not described herein again.

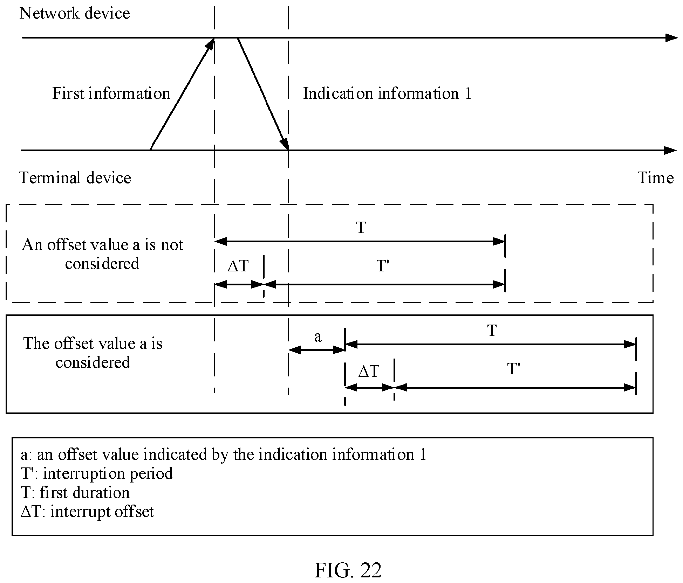

FIG. 22 is used as an example. The second indication information is indication information 1, the indication information 1 indicates an offset value a, the offset value a is an offset of a start time point of the first duration T relative to a reference time unit, and the reference time unit is a time unit in which the indication information 1 is located.

As shown in a dashed-line box in FIG. 22, when the offset value a is not considered, the start time point of the first duration T is a time unit in which the first information is located.

As shown in a solid-line box in FIG. 22, when the offset value a is considered, the start time point of the first duration T has a specific offset, that is, a backward offset of duration a relative to the time unit in which the indication information 1 is located.

In FIG. 22, for the first duration T, the interrupt offset ΔT, and the interruption period T', refer to the descriptions in Embodiment 2. Details are not described herein again.

For example, the indication information may be carried in an RRC message, MAC-CE signaling, or DCI. This is not limited in this embodiment of this application.

For the network device, after sending the indication information, the network device performs S606.

S606: The network device determines the interruption period of the AI function 1 based on the first information and the indication information.

For example, when the indication information indicates the offset value (that is, the first offset value) of the interruption period, the interruption period of the AI function 1 is shown in the solid-line box in FIG. 21.

For another example, when the indication information indicates the offset value (that is, the second offset value) of the first duration T, the interruption period of the AI function 1 is shown in the solid-line box in FIG. 22.

For the terminal device, after receiving the indication information, the terminal device performs S607.

S607: The terminal device sends a first report to the network device within a time period of the interrupt offset ΔT. Correspondingly, the network device receives the first report from the terminal device.

For an implementation process of S607, refer to the description of S206. Details are not described herein again.

It is easy to understand that, in a possible alternative manner, within the time period of the interrupt offset ΔT, the AI model 2 runs normally. After determining a third report using the AI model 2, the terminal device sends the third report determined using the AI model 2 to the network device. Correspondingly, S607 may be alternatively described as that the terminal device sends the third report to the network device within the time period of the interrupt offset ΔT. Correspondingly, the network device receives the third report from the terminal device. For details, refer to the description in the alternative description in S206. Details are not described herein again.

For the terminal device, within the interruption period of the AI function 1, the terminal device performs S608a or S608b.

S608a: The terminal device skips sending the first report to the network device within the interruption period of the AI function 1 according to a preconfigured rule. Correspondingly, the network device skips receiving the first report from the terminal device according to the preconfigured rule.

For an implementation process of S608a, refer to the description of S106a. Details are not described herein again.

S608b: The terminal device sends a second report to the network device within the interruption period of the AI function 1 according to a preconfigured rule. Correspondingly, the network device receives the second report from the terminal device according to the preconfigured rule.

For an implementation process of S608b, refer to the description of S106b. Details are not described herein again.

For the terminal device, after the interruption period of the AI function 1, the terminal device performs S609.

S609: The terminal device sends the first report to the network device after the interruption period of the AI function 1. Correspondingly, the network device receives the first report from the terminal device.

For an implementation process of S609, refer to the description of S107. Details are not described herein again.

It is easy to understand that Embodiment 6 may be combined with any one of Embodiment 1 to Embodiment 5, that is, the network device dynamically indicates the offset value to the terminal device. There is no doubt that the offset value may be a statically configured value.

For example, the offset value is a fixed value, and the fixed value is a value pre-agreed on by the network device and the terminal device, or is agreed on in a protocol. For example, the offset value is X slots, or the offset value is X symbols.

For another example, the offset value is a configured value, and the configured value is data in configuration information sent by the network device to the terminal device. An AI CSI reporting configuration is used as an example. The network device indicates the AI CSI reporting configuration to the terminal device based on an RRC message. The configured value may be a value in the RRC message. In addition, the configured value may be reconfigured based on an RRC message.

It should be understood that, in Embodiment 1 to Embodiment 6, a nominal moment is involved. For example, a nominal moment X indicates a moment that is commonly understood by both the network device and the terminal device. For example, it is commonly considered that the terminal device performs a processing step A at a moment X. However, actually, whether the terminal device is performing the processing step A at the moment X is not limited in this embodiment of this application.

### Embodiment 7

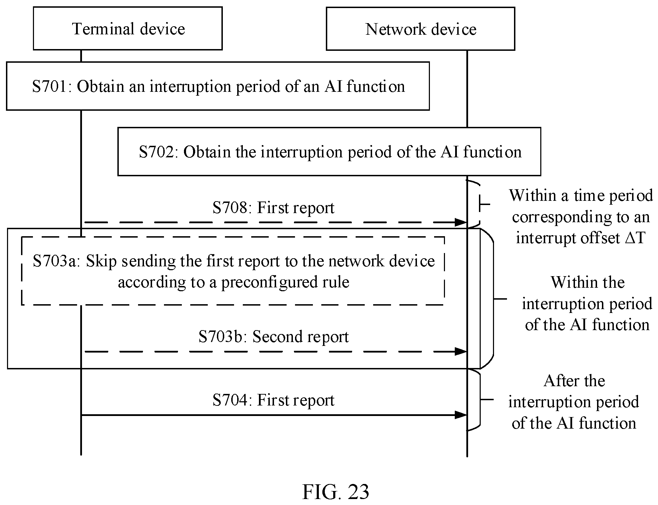

For example, as shown in FIG. 23, this embodiment includes the following steps.

S701: A terminal device obtains an interruption period of an AI function.

The AI function is an AI function supported by the terminal device. For details, refer to the description of the AI function 1 in Embodiment 1 to Embodiment 6. Details are not described herein again.

The interruption period includes a start time point and interruption duration. For details, refer to the descriptions of the interruption period of the AI function 1 in Embodiment 1 to Embodiment 6. Details are not described herein again.

S702: A network device obtains the interruption period of the AI function.

For the AI function and the interruption period of the AI function, refer to the description of S702. Details are not described herein again.

For the terminal device, after determining the interruption period of the AI function, the terminal device performs S703a or S703b.

S703a: The terminal device skips sending a first report to the network device within the interruption period according to a preconfigured rule. Correspondingly, the network device skips receiving the first report from the terminal device according to the preconfigured rule.

The first report is associated with the AI function. For example, the first report is a report determined using the AI function. For details, refer to the descriptions of the first report in Embodiment 1 to Embodiment 6. Details are not described herein again.

For an implementation process of S703a, refer to the descriptions of S106a, S207a, S308a, S406a, S507a, and S608a. Details are not described herein again.

S703b: The terminal device sends a second report to the network device within the interruption period according to a preconfigured rule. Correspondingly, the network device receives the second report from the terminal device according to the preconfigured rule.

The second report is not associated with the AI function. For example, the second report is a report reported by the terminal device in a conventional manner, or the second report is associated with another AI function. For details, refer to the descriptions of the second report in Embodiment 1 to Embodiment 6. Details are not described herein again.

For an implementation process of S703b, refer to the descriptions of S106b, S207b, S308b, S406b, S507b, and S608b. Details are not described herein again.

It is easy to understand that, in this embodiment of this application, for the terminal device, the terminal device first performs S701, and then performs S703a (or S703b). For the network device, the network device first performs S702, and then performs S703a (or S703b). When the network device configures the interruption duration for the terminal device, the network device first performs S702, and then the terminal device performs S701. When the terminal device reports the interruption duration or a size of storage space occupied by a model to the network device, the terminal device first performs S701, and then the network device performs S702.

In a possible design, after performing S703a (or S703b), the terminal device further performs S704.

S704: The terminal device sends the first report to the network device after the interruption period. Correspondingly, the network device receives the first report from the terminal device.

In a model deployment scenario, the AI function corresponds to a first AI model. The first report is determined using the first AI model. For details, refer to the descriptions of S107 and S409. Details are not described herein again.

In a model switching scenario, the AI function corresponds to a first AI model and a second AI model. The second AI model is an AI model used by the terminal device before model switching, and the first AI model is an AI model used by the terminal device after model switching. The first report is determined using the first AI model. For details, refer to the descriptions of S208, S309, S508, and S609. Details are not described herein again.

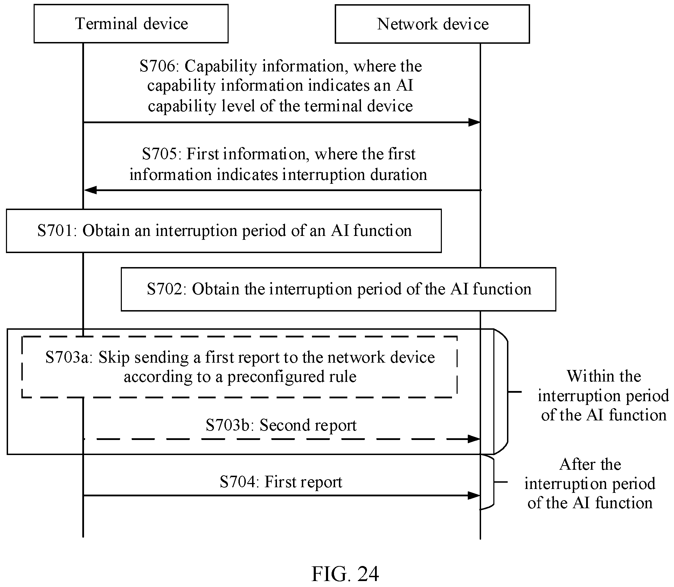

In a possible design, as shown in FIG. 24, when the network device configures the interruption duration for the terminal device, before performing S701, the terminal device further performs S705.

S705: The network device sends first information to the terminal device. Correspondingly, the terminal device receives the first information from the network device.

The first information indicates the interruption duration.

For example, for the first information, refer to the description of S302 in Embodiment 3. Details are not described herein again.

In a possible design, before performing S705, the terminal device further performs S706.

S706: The terminal device sends capability information to the network device. Correspondingly, the network device receives the capability information from the terminal device.

The capability information indicates an AI capability level of the terminal device, the AI capability level corresponds to duration, and the duration corresponding to the AI capability level is for determining the interruption duration.

For example, for the first information, refer to the description of S301 in Embodiment 3. Details are not described herein again.

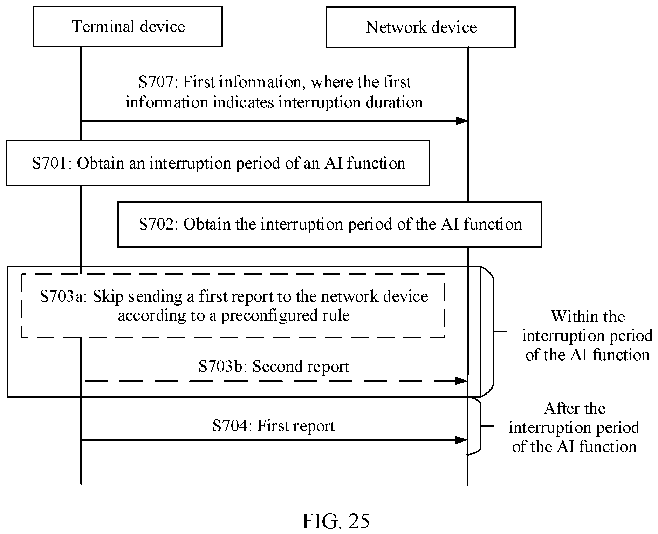

In a possible design, as shown in FIG. 25, when the terminal device reports the interruption duration to the network device, after performing S701 and before performing S703a (or S703b), the terminal device further performs S707.

S707: The terminal device sends first information to the network device. Correspondingly, the network device receives the first information from the terminal device.

The first information indicates the interruption duration.

For example, for the first information, refer to the descriptions of the interruption duration T1 in S103 in Embodiment 1, S204, S403, and S604. Details are not described herein again.

In a possible design, after performing S701 and before performing S703a (or S703b), the terminal device further performs S708.

S708: The terminal device sends the first report to the network device within a time period of an interrupt offset ΔT. Correspondingly, the network device receives the first report from the terminal device.

For example, in the model switching scenario, the first report transmitted within the time period of the interrupt offset ΔT is determined using the second AI model before model switching.

For an implementation process of S708, refer to the descriptions of S206, S307, S506, and S607. Details are not described herein again.

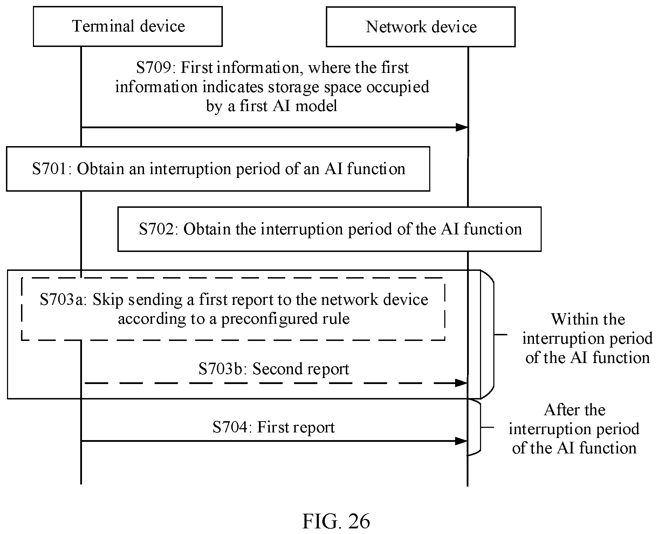

In a possible design, as shown in FIG. 26, when there is a correspondence between the size of the storage space occupied by the model and the duration, after performing S701 and before performing S703a (or S703b), the terminal device further performs S709.

S709: The terminal device sends first information to the network device. Correspondingly, the network device receives the first information from the terminal device.

The first information indicates storage space occupied by the first AI model, and the storage space occupied by the first AI model is for determining the interruption duration.

For example, for the first information, refer to the description of S504 in Embodiment 5. Details are not described herein again.

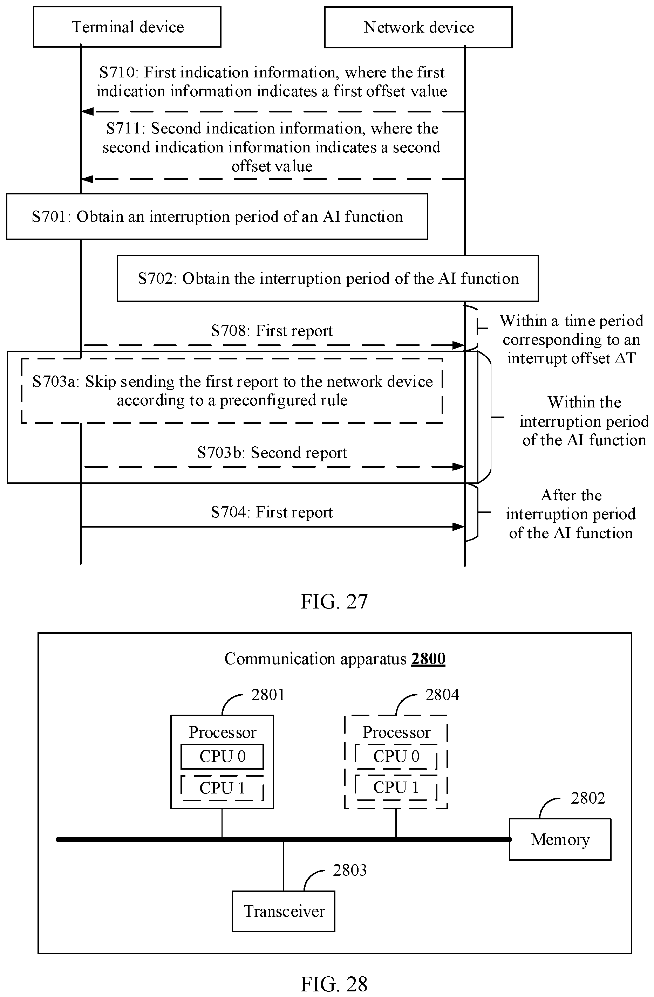

In a possible design, as shown in FIG. 27, before performing S701, the terminal device further performs S710.

S710: The network device sends first indication information to the terminal device. Correspondingly, the terminal device receives the first indication information from the network device.

The first indication information indicates a first offset value, and the first offset value indicates an offset of a start time point of the interruption period relative to a reference time unit.

The reference time unit includes a time unit in which the first indication information is located, or the reference time unit includes a time unit in which a predefined message is located.

For example, for the first indication information, refer to the description of FIG. 21 in Embodiment 6. Details are not described herein again.

In a possible design, as shown in FIG. 27, before performing S701, the terminal device further performs S711.

S711: The network device sends second indication information to the terminal device. Correspondingly, a terminal device receives the second indication information from the network device.

The second indication information indicates a second offset value, and the second offset value indicates an offset of a start time point of the first duration T relative to a reference time unit. The reference time unit includes a time unit in which the second indication information is located, or the reference time unit includes a time unit in which a predefined message is located.

For example, for the first indication information, refer to the description of FIG. 22 in Embodiment 6. Details are not described herein again.

The foregoing mainly describes the solutions provided in embodiments of this application from a perspective of interaction between network elements. Correspondingly, an embodiment of this application further provides a communication apparatus. The communication apparatus may be the network element in the foregoing method embodiment, an apparatus including the foregoing network element, or a component that can be used in a network element. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

For example, FIG. 28 is a diagram of a structure of a communication apparatus according to an embodiment of this application. The communication apparatus may be a terminal device, or may be a chip (system) or another component or assembly that can be disposed in the terminal device. Alternatively, the communication apparatus may be a network device, or may be a chip (system) or another component or assembly that can be disposed in the network device.

As shown in FIG. 28, the communication apparatus 2800 may include a processor 2801. Optionally, the communication apparatus 2800 may further include a memory 2802 and/or a transceiver 2803. The processor 2801 is coupled to the memory 2802 and the transceiver 2803, for example, may be connected through a communication bus.

The following describes each component of the communication apparatus 2800 in detail with reference to FIG. 28.

The processor 2801 is a control center of the communication apparatus 2800, and may be one processor, or may be a collective term of a plurality of processing elements. For example, the processor 2801 is one or more central processing units (central processing units, CPUs), and may be an application specific integrated circuit (application specific integrated circuit, ASIC) or one or more integrated circuits configured to implement embodiments of this application, for example, one or more digital signal processors (digital signal processors, DSPs) or one or more field programmable gate arrays (field programmable gate arrays, FPGAs).

Optionally, the processor 2801 may perform various functions of the communication apparatus 2800 by running or executing a software program stored in the memory 2802 and invoking data stored in the memory 2802.

During specific implementation, in an embodiment, the processor 2801 may include one or more CPUs, for example, a CPU 0 and a CPU 1 shown in FIG. 28.

During specific implementation, in an embodiment, the communication apparatus 2800 may also include a plurality of processors, for example, the processor 2801 and a processor 2804 shown in FIG. 28. Each of the processors may be a single-core processor (single-CPU), or may be a multicore processor (multi-CPU). The processor herein may be one or more devices, circuits, and/or processing cores configured to process data (for example, computer program instructions).

The memory 2802 is configured to store the software program for performing the solutions of this application, and the processor 2801 controls the execution. For a specific implementation, refer to the foregoing method embodiments. Details are not described herein.

Optionally, the memory 2802 may be a read-only memory (read-only memory, ROM) or another type of static storage device that may store static information and instructions, or a random access memory (random access memory, RAM) or another type of dynamic storage device that may store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium that can be for carrying or storing expected program code in a form of instructions or a data structure and can be accessed by a computer, but is not limited thereto. The memory 2802 may be integrated with the processor 2801, or may exist independently, and is coupled to the processor 2801 through an interface circuit (not shown in FIG. 28) of the communication apparatus 2800. This is not specifically limited in this embodiment of this application.

The transceiver 2803 is configured to communicate with another communication apparatus. For example, the communication apparatus 2800 is the terminal device, and the transceiver 2803 may be configured to communicate with the network device. For another example, when the communication apparatus 2800 is a network device, the transceiver 2803 may be configured to communicate with a terminal device.

Optionally, the transceiver 2803 may include a receiver and a transmitter (not separately shown in FIG. 28). The receiver is configured to implement a receiving function, and the transmitter is configured to implement a sending function.

Optionally, the transceiver 2803 may be integrated with the processor 2801, or may exist independently, and is coupled to the processor 2801 through an interface circuit (not shown in FIG. 28) of the communication apparatus 2800. This is not specifically limited in this embodiment of this application.

It may be easily understood that the structure of the communication apparatus 2800 shown in FIG. 28 does not constitute a limitation on the communication apparatus. An actual communication apparatus may include more or fewer parts than those shown in the figure, combine some parts, or have different part arrangement.

In addition, for technical effect of the communication apparatus 2800, refer to the technical effect of the methods in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Optionally, an embodiment of this application further provides a computer program product carrying computer instructions. When the computer instructions are run on a computer, the computer performs the method described in the foregoing embodiments.

Optionally, an embodiment of this application further provides a computer-readable storage medium. The computer-readable storage medium stores computer instructions. When the computer instructions are run on a computer, the computer performs the method described in the foregoing embodiments.

Optionally, an embodiment of this application further provides a chip, including a processing circuit and a transceiver circuit. The processing circuit and the transceiver circuit are configured to implement the method described in the foregoing embodiments. The processing circuit is configured to perform a processing action in a corresponding method, and the transceiver circuit is configured to perform a receiving/sending action in the corresponding method.

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, a character "/" in this specification usually indicates an "or" relationship between associated objects, or may indicate an "and/or" relationship. A specific meaning depends on the context.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a communication device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device, wherein the terminal device supports an artificial intelligence AI function, and the method comprises:
obtaining an interruption period of the AI function, wherein the interruption period comprises a start time point and interruption duration; and
skipping sending a first report to a network device within the interruption period according to a preconfigured rule, or sending a second report to the network device within the interruption period according to a preconfigured rule, wherein
the first report is associated with the AI function, and the second report is not associated with the AI function.

2. The method according to claim 1, wherein the method further comprises:
sending the first report to the network device after the interruption period.

3. The method according to claim 1 or 2, wherein before the obtaining an interruption period of the AI function, the method further comprises:
receiving first information from the network device, wherein the first information indicates the interruption duration.

4. The method according to claim 3, wherein before the receiving first information from the network device, the method further comprises:
sending capability information to the network device, wherein the capability information indicates an AI capability level of the terminal device, the AI capability level corresponds to duration, and the duration corresponding to the AI capability level is for determining the interruption duration.

5. The method according to claim 1 or 2, wherein after the obtaining an interruption period of the AI function, and before the skipping sending a first report to a network device within the interruption period according to a preconfigured rule, or sending a second report to the network device within the interruption period according to a preconfigured rule, the method further comprises:
sending first information to the network device, wherein the first information indicates the interruption duration.

6. The method according to any one of claims 3 to 5, wherein
the first information comprises first duration T and an interrupt offset ΔT, wherein
the interruption duration T'=T-ΔT, T indicates duration between a start moment and an end moment of model switching, the model switching indicates that the terminal device switches from a second AI model of the AI function to a first AI model of the AI function, ΔT indicates an offset of the start time point of the interruption period relative to the start moment of the model switching, and the AI function corresponds to the first AI model and the second AI model.

7. The method according to claim 6, wherein after the obtaining an interruption period of the AI function, and before the skipping sending a first report to a network device within the interruption period according to a preconfigured rule, or sending a second report to the network device within the interruption period according to a preconfigured rule, the method further comprises:
sending the first report to the network device within a time period of the interrupt offset ΔT.

8. The method according to claim 1 or 2, wherein after the obtaining an interruption period of the AI function, and before the skipping sending a first report to a network device within the interruption period according to a preconfigured rule, or sending a second report to the network device within the interruption period according to a preconfigured rule, the method further comprises:
sending first information to the network device, wherein the first information indicates storage space occupied by a first AI model, and the storage space occupied by the first AI model is for determining the interruption duration.

9. The method according to any one of claims 1 to 8, wherein before the obtaining an interruption period of the AI function, the method further comprises: receiving first indication information from the network device, wherein
the first indication information indicates a first offset value, and the first offset value indicates an offset of the start time point of the interruption period relative to a reference time unit; and
the reference time unit comprises a time unit in which the first indication information is located, or the reference time unit comprises a time unit in which a predefined message is located.

10. The method according to any one of claims 1 to 8, wherein the start time point of the interruption period is a time unit in which a predefined message is located.

11. The method according to claim 6 or 7, wherein before the obtaining an interruption period of the AI function, the method further comprises: receiving second indication information from the network device, wherein
the second indication information indicates a second offset value, and the second offset value indicates an offset of a start time point of the first duration T relative to a reference time unit; and
the reference time unit comprises a time unit in which the second indication information is located, or the reference time unit comprises a time unit in which a predefined message is located.

12. The method according to claim 6 or 7, wherein a start time point of the first duration T is a time unit in which a predefined message is located.

13. The method according to any one of claims 9 to 12, wherein
the predefined message comprises one of the following:
a first message, wherein the first message is a message received by the terminal device from the network device, the first message is for determining whether the first AI model is stored by the terminal device, and the AI function corresponds to the first AI model;
a reply message, wherein the reply message is a message sent by the terminal device to the network device, the reply message indicates that the first AI model is stored by the terminal device, and the AI function corresponds to the first AI model;
an activation message, wherein the activation message is a message received by the terminal device from the network device, the activation message indicates to activate the AI function and/or the first AI model, and the AI function corresponds to the first AI model;
a switching request, wherein the switching request is a message sent by the terminal device to the network device, and the switching request is for requesting to switch from the second AI model of the AI function to the first AI model of the AI function;
a switching acknowledgment, wherein the switching acknowledgment is a message received by the terminal device from the network device, and the switching acknowledgment indicates to switch from the second AI model of the AI function to the first AI model of the AI function; and
the first information, wherein when the first information is information received by the terminal device from the network device, the first information indicates the interruption duration; or when the first information is information sent by the terminal device to the network device, the first information indicates the interruption duration or the storage space occupied by the first AI model, and the storage space occupied by the first AI model is for determining the interruption duration.

14. The method according to any one of claims 3 to 8, wherein the first information further indicates the start time point of the interruption period.

15. A communication method, applied to a network device, wherein the method comprises:
obtaining an interruption period of an artificial intelligence AI function, wherein the AI function is a function supported by a terminal device, and the interruption period comprises a start time point and interruption duration; and
skipping receiving a first report from the terminal device within the interruption period according to a preconfigured rule, or receiving a second report from the terminal device within the interruption period according to a preconfigured rule, wherein
the first report is associated with the AI function, and the second report is not associated with the AI function.

16. The method according to claim 15, wherein the method further comprises:
receiving the first report from the terminal device after the interruption period.

17. The method according to claim 15 or 16, wherein before the obtaining an interruption period of an AI function, the method further comprises:
sending first information to the terminal device, wherein the first information indicates the interruption duration.

18. The method according to claim 17, wherein before the sending first information to the terminal device, the method further comprises:
receiving capability information from the terminal device, wherein the capability information indicates an AI capability level of the terminal device, the AI capability level corresponds to duration, and the duration corresponding to the AI capability level is for determining the interruption duration.

19. The method according to claim 15 or 16, wherein before the obtaining an interruption period of an AI function, the method further comprises:
receiving first information from the terminal device, wherein the first information indicates the interruption duration.

20. The method according to any one of claims 17 to 19, wherein
the first information comprises first duration T and an interrupt offset ΔT, wherein
the interruption duration T'=T-ΔT, T indicates duration between a start moment and an end moment of model switching, the model switching indicates that the terminal device switches from a second AI model of the AI function to a first AI model of the AI function, ΔT indicates an offset of the start time point of the interruption period relative to the start moment of the model switching, and the AI function corresponds to the first AI model and the second AI model.

21. The method according to claim 20, wherein the method further comprises:
receiving the first report from the terminal device within a time period of the interrupt offset ΔT.

22. The method according to claim 15 or 16, wherein before the obtaining an interruption period of an AI function, the method further comprises:
receiving first information from the terminal device, wherein the first information indicates storage space occupied by a first AI model, and the storage space occupied by the first AI model is for determining the interruption duration.

23. The method according to any one of claims 15 to 22, wherein before the obtaining an interruption period of an AI function, the method further comprises: sending first indication information to the terminal device, wherein
the first indication information indicates a first offset value, and the first offset value indicates an offset of the start time point of the interruption period relative to a reference time unit; and
the reference time unit comprises a time unit in which the first indication information is located, or the reference time unit comprises a time unit in which a predefined message is located.

24. The method according to any one of claims 15 to 22, wherein the start time point of the interruption period is a time unit in which a predefined message is located.

25. The method according to claim 20 or 21, wherein before the obtaining an interruption period of an AI function, the method further comprises: sending second indication information to the terminal device, wherein
the second indication information indicates a second offset value, and the second offset value indicates an offset of a start time point of the first duration T relative to a reference time unit; and
the reference time unit comprises a time unit in which the second indication information is located, or the reference time unit comprises a time unit in which a predefined message is located.

26. The method according to claim 20 or 21, wherein a start time point of the first duration T is a time unit in which a predefined message is located.

27. The method according to any one of claims 23 to 26, wherein
the predefined message comprises one of the following:
a first message, wherein the first message is a message received by the terminal device from the network device, the first message is for determining whether the first AI model is stored by the terminal device, and the AI function corresponds to the first AI model;
a reply message, wherein the reply message is a message sent by the terminal device to the network device, the reply message indicates that the first AI model is stored by the terminal device, and the AI function corresponds to the first AI model;
an activation message, wherein the activation message is a message received by the terminal device from the network device, the activation message indicates to activate the AI function and/or the first AI model, and the AI function corresponds to the first AI model;
a switching request, wherein the switching request is a message sent by the terminal device to the network device, and the switching request is for requesting to switch from the second AI model of the AI function to the first AI model of the AI function;
a switching acknowledgment, wherein the switching acknowledgment is a message received by the terminal device from the network device, and the switching acknowledgment indicates to switch from the second AI model of the AI function to the first AI model of the AI function; and
the first information, wherein when the first information is information received by the terminal device from the network device, the first information indicates the interruption duration; or when the first information is information sent by the terminal device to the network device, the first information indicates the interruption duration or the storage space occupied by the first AI model, and the storage space occupied by the first AI model is for determining the interruption duration.

28. The method according to any one of claims 17 to 22, wherein the first information further indicates the start time point of the interruption period.

29. A terminal device, comprising a processor and a memory, wherein the processor is coupled to the memory, the memory stores program instructions, and when the program instructions stored in the memory are executed by the processor, the method according to any one of claims 1 to 14 is implemented.

30. A network device, comprising a processor and a memory, wherein the processor is coupled to the memory, the memory stores program instructions, and when the program instructions stored in the memory are executed by the processor, the method according to any one of claims 15 to 28 is implemented.

31. A chip, comprising a processor and an input/output interface, wherein the input/output interface is configured to receive a signal from an apparatus other than the chip and transmit the signal to the processor, or send a signal from the processor to an apparatus other than the chip, and the processor is configured to implement the method according to any one of claims 1 to 28 by using a logic circuit or executing code instructions.

32. A computer-readable storage medium, wherein the storage medium stores a computer program or instructions, and when the computer program or the instructions are executed, the method according to any one of claims 1 to 28 is implemented.

33. A communication system, comprising a terminal device and a network device, wherein
the terminal device is configured to perform the method according to any one of claims 1 to 14; and
the network device is configured to perform the method according to any one of claims 15 to 28.
